(19) Europäisches Patentamt
European Patent Office
Office européen des brevets

(11) **EP 1 374 467 B1**

(12) **EUROPÄISCHE PATENTSCHRIFT**

(45) Veröffentlichungstag und Bekanntmachung des Hinweises auf die Patenterteilung:
**10.08.2005 Patentblatt 2005/32**

(21) Anmeldenummer: **02702392.8**

(22) Anmeldetag: **04.03.2002**

(51) Int Cl.[7]: **H04L 1/06**

(86) Internationale Anmeldenummer:
**PCT/EP2002/002330**

(87) Internationale Veröffentlichungsnummer:
**WO 2002/080437 (10.10.2002 Gazette 2002/41)**

(54) **VERFAHREN ZUM BETREIBEN EINES DIGITALEN MOBILFUNKNETZES MIT RAUM-ZEIT-BLOCK-CODES**

METHOD FOR OPERATING A DIGITAL MOBILE RADIO NETWORK WITH SPACE-TIME BLOCK CODES

PROCEDE POUR EXPLOITER UN RESEAU DE TELEPHONIE MOBILE NUMERIQUE AVEC DES CODES A BLOCS ESPACE-TEMPS

(84) Benannte Vertragsstaaten:
**DE FR GB IT**

(30) Priorität: **28.03.2001 EP 01107920**
**28.03.2001 DE 10115261**

(43) Veröffentlichungstag der Anmeldung:
**02.01.2004 Patentblatt 2004/01**

(73) Patentinhaber: **SIEMENS AKTIENGESELLSCHAFT**
**80333 München (DE)**

(72) Erfinder:
- **SEEGER, Alexander**
  **85622 Feldkirchen (DE)**
- **VOGL, Ulrich**
  **92263 Ebermannsdorf (DE)**

(56) Entgegenhaltungen:
- **B.HASSIBI, B.M.HOCHWALD: "Cayley differential unitary space-time codes, Available from Internet: <URL: http://mars.bell-labs.com/cm/ms/what/mars/papers/lie/lie.pdf" [ONLINE], 27. Februar 2001 (2001-02-27), XP002174210**
- **POPOVIC B M: "New complex space-time block codes for efficient transmit diversity" 2000 IEEE SIXTH INTERNATIONAL SYMPOSIUM ON SPREAD SPECTRUM TECHNIQUES AND APPLICATIONS. ISSTA 2000. PROCEEDINGS (CAT. NO.00TH8536), PROCEEDINGS OF INTERNATIONAL IEEE SYMPOSIUM ON SPREAD SPECTRUM TECHNIQUES AND APPLICATIONS (6TH ISSSTA), PARSIPPANY, N, Seiten 132-136 vol.1, XP002174208 2000, Piscataway, NJ, USA, IEEE, USA ISBN: 0-7803-6560-7**
- **TAROKH ET AL: "Space-time block codes from orthogonal designs" IEEE TRANSACTIONS ON INFORMATION THEORY, IEEE INC. NEW YORK, US, Bd. 45, Nr. 5, Juli 1999 (1999-07), Seiten 1456-1467, XP002161393 ISSN: 0018-9448 in der Anmeldung erwähnt**
- **TIRKKONEN O ET AL: "Complex space-time block codes for four Tx antennas" GLOBECOM '00 - IEEE. GLOBAL TELECOMMUNICATIONS CONFERENCE. CONFERENCE RECORD (CAT. NO.00CH37137), PROCEEDINGS OF GLOBAL TELECOMMUNICATIONS CONFERENCE, SAN FRANCISCO, CA, USA, 27 NOV.-1 DEC. 2000, Seiten 1005-1009 vol.2, XP002174209 2000, Piscataway, NJ, USA, IEEE, USA ISBN: 0-7803-6451-1 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 374 467 B1

## Beschreibung

Die vorliegende Erfindung bezieht sich auf ein Verfahren zum Betreiben eines digitalen Mobilfunknetzes unter Verwendung von Raum-Zeit-Block-Codes (ST-Codes = "Space-Time-Block Codes") nach dem Oberbegriff des Anspruchs 1.

Derartige Verfahren nach dem Oberbegriff des Anspruchs 1 sind z.B. in "Space-Time Codes for High Data Rate Wirelesss Communication: Performance Criterion and Code Construction" von V. Tarokh et. al. in IEEE Transactions on Information Theory, vol. 44, no. 2 März 1998, Seiten 744 - 765 oder in "Space-Time Block Codes from Orthogonal Designs", IEEE Transactions on Information Theory, vol. 45, no. 5, July 1999, Seiten 1456-1467 von V. Tarokh et.al. beschrieben.

Der Verwendung der dort beschriebenen Raum-Zeit-Block-Codes liegt folgendes physikalische Problem in Mobilfunknetzen zugrunde: Eine übertragungswegbedingte starke Dämpfung oder Verzerrung eines von einer sendenden Station (z.B. einer ortsfesten Basisstation in einem Mobilfunknetz) drahtlos ausgesandten Sendesignals macht es für eine empfangende Station (z.B. eine Mobilstation in einem Mobilfunknetz) sehr schwierig, das ursprünglich ausgesandte Sendesignal korrekt zu erkennen. Dies gilt vor allem dann, wenn sich die empfangende Mobilstation in einer drahtlosen Mehrfachpfad-Empfangsumgebung ("multipath wireless environment") befindet, wo sie z.B. aufgrund von Mehrfachreflexionen des ursprünglichen Sendesignals an den Wänden von umgebenden Gebäuden nur mehrere stark abgeschwächte "Echos" des ursprünglichen Sendesignals empfängt. Um hier Abhilfe zu schaffen, ist für eine gewisse "Diversität" des empfangenen Signals zu sorgen. Dies geschieht dadurch, dass der empfangenden Station zusätzlich noch ein oder mehrere weniger stark abgeschwächte "Abbilder" des ausgesandten Sendesignals zur Verfügung gestellt werden. Die sogenannte "Diversitätsordnung" ist dabei ein Maß für die am Empfänger erhaltene Anzahl der statistisch unabhängigen "Abbilder" der vom Sender ausgestrahlten Sendesignale.

In der Praxis wird diese erforderliche Diversität z.B. dadurch erzielt, dass sender- und/oder empfängerseitig jeweils mehrere räumlich beabstandet zueinander positionierte oder unterschiedlich polarisierte Sende- bzw. Empfangsantennen verwendet werden, die jeweils ein "Abbild" eines zu übertragenen Signals ausstrahlen bzw. empfangen. "Abbild" bedeutet dabei nicht notwendigerweise, dass zwei oder mehr exakt identische Kopien desselben Signals ausgesandt werden.

Vielmehr können insbesondere auch bei den bekannten Raum-Zeit-Block-Codes zu einem gegebenen Zeitpunkt von den verschiedenen Sendeantennen unterschiedliche Signale ausgesandt werden, die sich jeweils durch einen speziellen Codierungsalgorithmus aus den Informationsbits des ursprünglichen Signals ergeben. Bei jeder Empfangsantenne geht dann zu einem gegebenen (signallaufzeitbedingt späteren) Zeitpunkt die Summe der übertragungswegbedingt veränderten Sendesignale ein, aus denen empfängerseitig unter Zuhilfenahme von MLD-Schätzalgorithmen ("maximum-likelihooddetection") wiederum solche Informationsbits rekonstruiert werden, die mit einer möglichst hohen Wahrscheinlichkeit den Informationsbits des ursprünglichen Signals entsprechen.

Zum besseren Verständnis des der vorliegenden Erfindung zugrundeliegenden Problems sei auf die Figuren 1 und 2 Bezug genommen.

Fig. 1 zeigt schematisch eine konventionelle Einantennen-Einantennen-Funkübertragungsstrecke zwischen einem Sender Tx und einem Empfänger Rx in einem digitalen Mobilfunknetz. In den Sender werden Informationsbits eingespeist, die z.B. aus einer Folge von Einsen und Nullen bestehen. Es sei angenommen, dass ein Bitvektor (1,0,1) der Länge $l$=3 eingespeist werde, der aus der Zahlenfolge 1-0-1 bestehe. Je nach angewandtem Codierungsverfahren wird dieser Bitvektor senderseitig eineindeutig (d.h. umkehrbar eindeutig) in einen Symbolvektor der Länge $n$ transformiert. Wie in Fig. 1 durch unterschiedliche Graustufen versinnbildlicht, können die im Symbolvektor auftretenden Zahlen von 1 und 0 abweichen, insbesondere können die im Symbolvektor auftretenden Zahlen auch komplexe Zahlen sein, bei denen z.B. dem Realteil und Imaginärteil entsprechende Signale um 90° phasenverschoben zueinander gesendet werden.

In Fig. 1 ist der Fall $n=l$=3 dargestellt, d.h. jedes Einzelbit wird in ein Einzelsymbol codiert (BPSK-Modulation - Binary Phase Shift Keying; bei QPSK - Quadrature Phase Shift Keying würde $n=l/2$ gelten).

Ein mehrere Einzelymbole umfassender Symbolvektor wird dann von einer Antenne im Sender Tx ausgestrahlt und von einem Empfänger Rx empfangen. Dort wird der Symbolvektor der Länge $n$=3 durch eine Umkehrtransformation in den ursprünglichen Bitvektor (hier (1,0,1))der Länge $l$=3 rekonstruiert.

Fig. 2 zeigt schematisch eine Funkübertragungsstrecke zwischen einer Sendeanlage mit $n$=3 Sendeantennen Tx1, Tx2, Tx3 und einem Empfänger Rx in einem digitalen Mobilfunknetz, wobei wie an sich bereits bekannt, Raum-Zeit Block Codes verwendet werden. Dabei wird ein Bitvektor der Länge $l$=3 einer Raum-Zeit Block-Codiervorrichtung (ST-Codierer = space time-Codierer) zugeführt. Dieser bildet einen eingehenden Bitvektor auf eine $n \times n$ Matrix ab.

Dabei entspricht $n$ der Anzahl der Sendeantennen, die bei der Sendeanlage verwendet werden. In einem gegebenen Zeitschlitz $j$ sendet einen Antenne $i$ ein Signal, welches dem Matrixelement $c_{ijk}$ einer 3 x 3 Matrix $C_k$ entspricht, die durch den ST-Codierer aus dem eingehenden Bitvektor der Länge $l$=3 codiert wurde. $k$ ist dabei ein Index, der einzelne Matrizen unterscheidet, die ihrerseits wiederum eineindeutig k unterschiedlichen Bitvektoren entsprechen.

Diese Zusammenhänge werden weiter unten noch ausführlicher erläutert.

Durch die über die drei Sendeantennen Tx1, Tx2 und Tx3 abgestrahlten Signale kommen bei der Empfangsantenne Rx zu einem dem Sendezeitschlitz $j$ entsprechenden (laufzeitbedingt späteren) Empfangszeitpunkt Signale an, die den Matrixelementen $c_{1jk}, c_{2jk}, c_{3jk}$ entsprechen. Empfängerseitig wird aus der Summe der eingehenden Signale in einer Raum-Zeit-Block-Decodiervorrichtung (ST-Decodierer) durch MLD-Algorithmen wieder eine Raum-Zeit-Block-Matrix $C_k$ rekonstruiert und durch eine Umkehrabbildung in den entsprechenden ursprünglichen Bitvektor (hier (1,0,1)) zurückübersetzt.

Das allgemeine Problem dabei besteht nun darin, die Diversität bei der Mobilstation eines digitalen Mobilfunknetzes durch die Verwendung mehrerer Sendeantennen bei der Basisstation zu maximieren. Dabei sollen keine besonderen Vorkenntnisse über den zeitveränderlichen downlink-Kanal (von einer Basisstation zu einer Mobilstation) vorausgesetzt werden.

Für den Fall linearer Raum-Zeit Block-Codes bei zwei Antennen ist das Ergebnis bekannt (es ist in dem Sinne optimal, dass es eine Verdopplung der Diversität für zwei Antennen liefert) und es ist Teil der UMTS Norm (3GPP TS 25.211 V3.4.0:
Physical channels and mapping of transport channels onto physical channels (FDD) (Ausgabe 1999), September 2000) geworden. Dieses bekannte Raum-Zeit Block-Code-Schema erfüllt die "Rate 1"-Anforderung.

Ein Raum-Zeit Block-Code-Schema mit "Rate 1" ist anschaulich gesagt ein System, bei dem pro betrachtetem Zeitabschnitt genauso viele Informationsbits von einem Sender zu einem Empfänger effektiv durchgeschickt werden können, wie bei dem in Fig. 1 gezeigten Referenzsystem mit nur einer Sende- und einer Empfangsantenne. Mit anderen Worten: Ein "Rate 1"-ST-Code weist gegenüber einem Basissystem mit nur einer Sende- und einer Empfangsantenne eine unveränderte Übertragungsrate auf. Dies ist z.B. ein System bei dem ein Block aus zwei Codewörtern gleichzeitig in zwei aufeinanderfolgenden Zeitfenstern über zwei verschiedene Übertragungskanäle zum Empfänger übertragen wird; der Empfänger erhält damit pro Zeiteinheit genauso viel Information, als wenn zwei entsprechende Einzelbits in zwei aufeinanderfolgenden Zeitfenstern über einen einzigen Übertragungskanal übertragen worden wären. Somit ist z.B. im W-CDMA Modus der UMTS-Norm für zukünftige Mobilfunksysteme (siehe z.B. www. 3GPP.org) vorgesehen, die Standardabbildung von vier Bits auf $2^4$=16 ST-Symbole in zwei Zeitschritten über zwei Sendeantennen zu übertragen. Damit verhält sich ein System mit "Rate 1" für äußere Blöcke genauso wie das Basissystem mit nur einer Sende- und einer Empfangsantenne. Diese Eigenschaft ist entscheidend für die Aufrüstung eines Basissystems hin zu einem System mit mehreren Sendeantennen und Raum-Zeit-Block-Codes.

Der im W-CDMA Modus verwendete Raum-Zeit-Block-Code entspricht dem sogenannten Alamouti-Code. Dabei handelt es sich um einen empfängerseitig sehr einfach zu rekonstruierenden Code zur Erhöhung der Diversität in einem digitalen Mobilfunknetz mit einer sendenden Station mit zwei ($n$=2) Sendeantennen. Der Alamouti-Code ist z.B. in "A simple Transmitter Diversity Scheme for Wireless Communications", IEEE J. Select Areas Commun, vol. 16, pp. 1451 - 1458, Oct. 1998 von S. M. Alamouti oder auch in den beiden obengenannten Veröffentlichungen von V. Tarokh et.al. beschrieben.

Um die Diversität in einem Mobilfunknetz in der Zukunft sowohl in "uplink"-Richtung (von einer Mobilstation zu einer Basisstation) als auch in "downlink"-Richtung (von einer Basisstation zu einer Mobilstation) weiter zu erhöhen, sollte die Anzahl der Antennen pro Sektor einer Basisstation größer sein als zwei. Somit ist es naheliegend, nach Raum-Zeit-Codes zu suchen, welche anwendbar sind im Falle von drei, vier oder mehr Sendeantennen. Eine Erhöhung der Diversität bei gleichbleibender Sendeleistung führt dabei zu einer Erhöhung der Empfangsqualität. Oder anders betrachtet: Durch die Erhöhung der Diversität kann bei gleichbleibender Empfangsqualität die Sendeleistung verringert werden. Die dann in einem Sender nicht ausgeschöpfte Sendeleistung kann dann wiederum dazu benutzt werden, mehr Teilnehmer zu versorgen.

Ferner wird die Leistungsfähigkeit eines Raum-Zeit-Block-Codes auch durch die Abstände zwischen den Codewörtern beeinflusst. Betrachtungen hierzu sind in den beiden schon genannten Artikeln von V. Tarokh et. al. enthalten.

In der in Fig. 2 schematisch dargestellten Übertragung entspricht die gezeigte Matrix mit den Elementen $c_{ijk}$ einem Codewort mit der Nummer $k$. Der "Abstand" zwischen Codewörtern, d.h. der "Abstand" zwischen zwei Matrizen $C_{k1}$ und $C_{k2}$ ist letztlich ein Maß für die Güte eines Übertragungscodes, d.h. für die Wahrscheinlichkeit, mit der aus einer Folge von übertragungswegbedingt verzerrt beim Empfänger eingehenden Codewörtern doch wieder die ursprünglich ausgesandten Codewörter möglichst eindeutig rekonstruiert werden. Unter diesem Aspekt sind die bekannten Raum-Zeit-Block-Codes für den Fall zweier Sendeantennen noch verbesserbar.

Für den Fall von drei, vier oder mehr Antennen ($n$>2) ist in "Space-time Block Codes from Orthogonal Designs", IEEE Transactions on Information Theory, vol. 45, no. 5, July 1999, Seiten 1456-1467 von V. Tarokh et.al. gezeigt worden, dass lineare Codes mit "Rate 1" und komplexen Symbolen nicht existieren können.

In einer auf der Globecom 2000 im Dezember 2000 gegebenen Präsentation über "Complex Space-Time Block Codes for Four Tx Antennas" von Olav Tirkkonen und Ari Hottinen wurde der Fall mit $n$=4 Sendeantennen untersucht und komplexwertige Raum-Zeit-Block-Codes mit einer Rate von 3/4 angegeben.

Somit hat die Suche nach Raum-Zeit-Codes insbesondere für eine Anzahl *n*>2 von Sendeantennen gegenwärtig zwei Stossrichtungen eingeschlagen:

1. In "Space-time Block Codes from Orthogonal Designs", IEEE Transactions on Information Theory, vol. 45, no. 5, July 1999, Seiten 1456-1467 von V. Tarokh et.al. sind lineare Raum-Zeit-Codes mit einer Rate kleiner eins für mehr als zwei Sendeantennen konstruiert worden. Dabei sind die Raum-Zeit-Symbole Linearkombinationen der ursprünglichen Signale. Diese Konstruktionen sind nicht offen für äußere Kodierungen, weil sie nicht die "Rate 1"-Eigenschaft aufweisen. Somit können sie nicht als einfache Zusatzmerkmale in einem existierenden Mobilfunksystem ohne Raum-Zeit-Codierung integriert werden.

2. Durch Kombinieren von Raum-Zeit-Codes mit äußeren Fehlerkorrekturcodes sind Raum-Zeit-Faltungs-Codes ("space-time trellis codes") konstruiert worden. Das Mischen von Raum-Zeit-Abbildungen mit äußeren Codierungen macht es jedoch abermals unmöglich, Raum-Zeit-Codes als ein einfach hinzuzufügendes Merkmal in ein existierendes System zu integrieren. Weiterhin müssen in einem solchen Fall bewährte äußere Codierungstechniken wie Turbocodes (siehe C. Berron, A. Glavieux und P. Thitimajshima: "Near Shannon limit error correcting codes and decoding: turbo codes" in Proc. IEEE ICC, Geneva, May 1993, pp. 1064-1070))oder Faltungscodes geändert werden.

Es zeigt sich somit das Problem, das die in einem digitalen Mobilfunknetz zwischen sendender und empfangender Station zu übertragenden digitalen Codewörter für den Fall von zwei oder mehr Sendeantennen unter folgenden Aspekten optimiert sein sollen:

1. Es soll möglichst ein "Rate 1" Code vorliegen.

Dies ist eine zwingende Voraussetzung dafür, dass bisher schon am Markt befindliche Mobilfunknetze mit möglichst geringem Umrüstaufwand auf die Verwendung der neuen Raum-Zeit-Block-Codes umgerüstet werden können. Bei der Verwendung von "Rate 1" müssen bei der Umrüstung von einem in Fig. 1 gezeigten konventionellen Einantennen-Einantennen-System auf ein in Fig. 2 gezeigtes Mehrantennen-Einantennen-System (oder auch auf Mehrantennen-Mehrantennensysteme) die senderseitig zur Erzeugung des einzuspeisenden Bitvektors benötigten Baugruppen (in Fig. 1 und 2 nicht gezeigt) und die empfängerseitig zur Weiterbearbeitung der von der Empfangseinheit ausgegebenen rekonstruierten Bitvektoren benötigten Baugruppen (ebenfalls nicht gezeigt) nicht ausgetauscht werden. "Rate 1"-Codes garantieren also eine "Abwärtskompatibilität" von mit Mehrantennen-Anlagen und entsprechenden Raum-Zeit-Block-Codes betriebenen digitalen Mobilfunkstationen mit bereits bestehenden sonstigen Systemkomponenten und beseitigen somit ein entscheidendes Investitionshemmnis, welches der praktischen Einführung von "Rate ≠ 1"-Systemen entgegensteht, da bei diesen auch die Baugruppen zur senderseitigen Bitvektorenerzeugung und zur empfängerseitigen Bitvektorenrekonstruktion ausgetauscht werden müssten.

Aufgrund der Einführung von Raum-Zeit-Block Codes mit "Rate 1" ist es also möglich, die übrigen Parameter eines Sendecodeschemas (wie die Kanalcodierung, Verwürfelung (Interleaving), Dienste-Multiplexing usw. unverändert zu lassen).

2. Der Code soll senderseitig simpel zu konstruieren und empfängerseitig simpel zu rekonstruieren sein.

3. Die Code-Wörter sollen möglichst "großen Abstand" zu einander haben. Das heißt, ein Satz von Code-Wörtern soll so aufgebaut sein, dass aus den empfängerseitig verrauscht und/oder verzerrt empfangenen Signalen, welche jeweils aus dem senderseitig abgestrahlten ursprünglichen Signal mal einem den mit zunehmendem Laufweg einhergehenden Intensitätschwund beschreibenden "Schwundfaktor" ("Fadingwert") plus Rauschen (thermisches Rauschen am Eingangsverstärker des Empfängers plus Interferenzrauschen durch Störsignale anderer Benutzer des Mobilfunknetzes) bestehen, sich auch bei relativ starken Störungen immer noch möglichst fehlerfrei als die senderseitig ausgesandten Signale rekonstruieren lassen (also ohne Verwechslungen zwischen einzelnen Codewörtern).

4. Der verwendete Raum-Zeit-Block-Code soll die Diversität maximieren, d.h. für zwei Sendeantennen soll möglichst der theoretisch maximale Diversitätsgrad von 2, für drei Sendeantennen der theoretisch maximale Diversitätsgrad von 3 erreicht werden, usw.

5. Der verwendete Raum-Zeit-Block-Code soll komplexwertige Sendesymbole ermöglichen, um z.B. bei UMTS einsetzbar zu sein, wo eine QPSK-Modulation (Quadrature Phase Shift Keying) verwendet wird. Durch komplexwertige Symbole sind auch 8-PSK (8-Phase Shift Keying) oder M-QAM (M-fold Quadrature Amplitude Modulation) möglich.

Aufgabe der vorliegenden Erfindung ist es, die bekannten Verfahren zum Betreiben eines digitalen Mobilfunknetzes nach dem Oberbegriff des Anspruchs 1 durch Verwendung alternativer Raum-Zeit-Block-Codes hinsichtlich der obengenannten Kriterien 1. bis 5. möglichst zu optimieren. Dabei sollen insbesondere Raum-Zeit-Block-Codes mit " Rate 1" und maximaler Sendediversität für den Fall von drei oder mehr Sendeantennen ($n$>2) bereitgestellt werden. Es sollen insbesondere aber auch abstandsoptimierte Raum-Zeit-Block-Codes für den Fall $n$≥2 bereitgestellt werden.

Diese Aufgabe wird in ihrer allgemeinsten Form erfindungsgemäß durch die Maßnahmen des Anspruches 1 gelöst.

Den Maßnahmen des Anspruchs 1 liegt die in der weiteren Beschreibung dargestellte Erkenntnis zugrunde, dass für den Fall von bekannten Verfahren zum Betreiben von Mobilfunknetzen nach dem Oberbegriff des Anspruchs 1 Raum-Zeit-Block-Codes gebildet werden können, die sich aus unitären $n$ x $n$ Matrizen gemäß den kennzeichnenden Merkmalen des Anspruchs 1 konstruieren lassen.

Insbesondere im Falle von $n$>2, also drei und mehr Sendeantennen, wird gemäß der vorliegenden Erfindung aufgezeigt, dass Raum-Zeit-Block-Codes für Mobilfunksysteme mit $n$ Sendeantennen und $m$ Empfangsantennen mit einem komplexen ST-Modulationsschema mit dem Diversitätsgrad $n$ x $m$ und der "Rate 1" grundsätzlich existieren, da sie sich aus unitären $n$ x $n$ Matrizen gemäß dem kennzeichnenden Teil des Anspruchs 1 konstruieren lassen.

Die weiteren unabhängigen Verfahrensansprüche 3 und 8 betreffen Verfahren nach dem Oberbegriff des Anspruchs 1, mit denen im Falle von zwei und mehr ($n$≥2) Sendeantennen optimierte Raum-Zeit-Block-Codes mit einem komplexen ST-Modulationsschema mit dem Diversitätsgrad $n$ x $m$ und "Rate 1" numerisch ermittelt werden, bei denen die Codesymbole größtmöglichen "Abstand" im Sinne einer jeweils angegebenen Metrik aufweisen.

Die weiteren unabhängigen Sachansprüche betreffen Basis- und Mobilstationen in einem digitalen Mobilfunknetz, in welchen Nachschlagetabellen, die die in den erfindungsgemäßen Verfahren verwendeten Matrixelemente von Codewörtern enthalten, hinterlegt sind, sowie Computerprogrammprodukte, in denen entsprechende Nachschlagetabellen implementiert sind.

Die abhängigen Ansprüche betreffen vorteilhafte Ausführungsformen der vorliegenden Erfindung.

Gemäß der vorliegenden Erfindung werden insbesondere Maßnahmen zur Konstruktion von Raum-Zeit-Block Codes mit einer "Rate 1", für drei, vier oder mehr Antennen angegeben, mit denen eine maximale Diversitätsverstärkung erzielt wird.

Dies wird als beachtlicher theoretischer und praktischer Durchbruch betrachtet und beruht auf zwei Änderungen gegenüber den aus dem Stand der Technik bekannten Vorgehensweisen:

1. Es werden nicht-lineare Codes verwendet. Dies stellt kein Problem dar, da die Zahl der Codewörter in Raum-Zeit-Blöcken $2^n$ für BPSK beträgt(BPSK = binary phase shift keying; digitale Frequenzmodulationstechnik zum Senden von Daten über ein Koaxialkabelnetzwerk: Dieser Modulationstyp ist weniger effizient aber auch weniger rauschanfällig als ähnliche Modulationstechniken, wie z.B. QPSK = quadrature phase shift keying) und $4^n$ für QPSK Modulation beträgt. D.h., dass selbst für n = 4 im Falle der Verwendung einer QPSK Modulation nur 256 Codewörter verwendet werden, die leicht in einer Tabelle gespeichert werden können.

2. Weder die ausgestrahlte Energie pro Antenne und Zeiteinheit noch die über alle Antennen zu einem vorgegebenen Zeitpunkt gemittelte Energie werden konstant gehalten. Insbesondere bei W-CDMA ist dies nicht kritisch, da größere Schwankungen in der Austrahlungsenergie auch in einem normalen System aufgrund der Überlagerung von verschiedenen Benutzersignalen auftreten können. Die zusätzlichen Schwankungen in der Leistung, welche durch die Verwendung neuer Raum-Zeit-Codes eingeführt werden, sind demgegenüber vernachlässigbar.

Figurenbeschreibung

Fig. 1 zeigt schematisch eine Funkübertragungsstrecke und eine entsprechende Symbolvektorcodierung und decodierung für eine bekannte EinantennenEinantennen-Anordnung in einem digitalen Mobilfunknetz;

Fig. 2 zeigt schematisch eine Funkübertragungsstrecke und eine entsprechende Symbolcodierung und -decodierung für eine an sich bekannte Raum-Zeit-Block-Codierung in einer Mehrantennen-Einantennen-Anordnung in einem digitalen Mobilfunknetz;

Fig. 3 zeigt in Tabellenform ein explizites Beispiel für eine BPSK-konforme Codierung von acht Bitvektoren in die Matrixelemente von acht komplexwertigen unitären Matrizen (ST-Symbolen), die einer Raum-Zeit-Block-Codierung bei der Durchführung eines erfindungsgemäßen Verfahrens für *n*=3 Sendeantennen zugrunde gelegt sind;

Fig. 4 veranschaulicht die Abstände zwischen acht ST-Symbolen für den in Verbindung mit Fig. 3 diskutierten Fall einer Raum-Zeit-Block-Codierung;

Fig. 5 zeigt für den Fall *n*=2 Sendeantennen den Vergleich im Code-Spektrum für einen erfindungsgemäß konstruierten abstandsoptimierten Raum-Zeit-Block-Code für den Fall SU(2) und einem nach dem bekannten Alamouti-Schema konstruierten Raum-Zeit-Code, welcher nicht abstandsoptimiert ist;

Fig. 6 zeigt für den Fall *n*=3 Sendeantennen ein Code-Spektrum für einen erfindungsgemäß konstruierten abstandsoptimierten Raum-Zeit-Code für den Fall SU(3) und QPSK-Modulation bei Verwendung einer Minimalnorm;

Fig. 7 zeigt ein Code-Spektrum für mittels erfindungsgemäßer numerischer Optimierungsverfahren konstruierter Raum-Zeit-Block-Codes für den Fall *n*=3 Sendeantennen und BPSK Modulierung unter Verwendung verschiedener Normen;

Fig. 8 zeigt eine BPSK Simulation für zwei und drei Antennen unter Verwendung eines $L_{min}$-Codes;

Fig. 9 zeigt das Spektrum der minimalen Eigenwerte bei verschiedenen erfindungsgemäßen Codes bei *n*=3 Sendeantennen und BPSK Modulierung; und

Fig. 10 zeigt eine BPSK-Simulation für *n*=3 Sendeantennen unter Verwendung eines $L_{-1}$-Codes.

Zum besseren Verständnis der vorliegenden Erfindung wird zunächst ein konstruktiver Beweis dafür angetreten, dass komplexe Raum-Zeit-Block Codes mit maximaler Diversität nicht nur für den Fall *n*=2 Sendeantennen existieren (wie z.B. durch das bekannte Alamouti-Schema gezeigt), sondern dass auch für den Fall mit *n*>2 Sendeantennen komplexe Raum-Zeit-Block mit maximaler Diversität existieren.

Die der vorliegenden Erfindung zugrundeliegende mathematische Struktur ist relativ kompliziert. In der Praxis reduziert sich die Anwendung der vorliegenden Erfindung aber auf die Verwendung einer Nachschlagetabelle für Raum-Zeit-Codewörter, welche in einem Empfänger und Sender gespeichert sind. Fig. 3 zeigt ein Beispiel für eine solche Nachschlagetabelle. Ihr Aufbau und ihre Verwendungsweise werden weiter unten noch ausführlicher erläutert werden. Diese Tabellen können dann verwendet werden, ohne dass man ein tiefergehendes Verständnis von ihrer Herleitung haben müßte.

Die in der vorliegenden Anmeldung verwendete mathematische Notation ist z.B. erklärt in Simon Barry, "Representation of Finite and Compact Groups", Graduate Studies in Mathematics, Volume 10, American Mathematical Society oder auch in Bronstein, Semendjajew: "Taschenbuch der Mathematik", p. 155, Verlag Harri Deutsch, Thun und Frankfurt/Main, ISBN 3 87144 492 8.

Erfindungsgemäß wird ein konzeptionell neuer Ansatz für Raum-Zeit Codes gegeben. Zunächst werden die Sendereinstellunngen beschrieben. Dann wird ein Standard-Mehrfach-Eingabe-Mehrfach-Ausgabe-Schwundkanal beschrieben. Zuletzt wird der Erfassungsprozess für Raum-Zeit-Symbole beschrieben.
Darauf aufbauend wird ein konstruktiver Beweis für die Existenz von Raum-Zeit-Codes mit maximaler Diversität für Mobilfunksysteme mit $n \geq 2$ Sendeantennen gegeben. Dieser Beweis deckt die Fälle mit komplex-wertigen und reellwertigen Raum-Zeit-Symbolen ab.
Obwohl der Existenzbeweis konstruktiv ist, liefert er keinen optimalen Raum-Zeit-Codes, d.h. einen Raum-Zeit-Code mit optimierten "Abständen" zwischen den Codewörtern. Deshalb werden auch noch praktische Verfahren zur Konstruktion von Codes basierend auf einer numerischen Optimierung gegeben. Letztendlich werden die Ergebnisses auch noch durch Simulationen bestätigt.

Sender

Es seien zunächst *n* Sendeantennen und eine Empfangsantenne angenommen.

(Eine Erweiterung auf *n* Sendeantennen und *m* Empfangsantennen sieht wie folgt aus:

Im Fall von *m*>1 Empfangsantennen werden die nachfolgend beschriebenen Codes und Detektionsverfahren jeweils für alle *m* Empfangsantennen getrennt durchgeführt. Anschließend werden die Ergebnisse im Sinne von eines "maximum ratio combining"-Verfahrens zusammengeführt. Ein solches "maximum ratio combining"-Verfahren ist z.B. in J. Proakis, M. Salehi: Communication Systems Engineering, Prentice Hall, 1994, ISBN: 0-13-306625-5, erläutert.

Dadurch ergibt sich dann ein maximaler Diversitätsgrad von *n x m*.
Insbesondere wird durch die Erweiterung auf $m>1$ Empfangsantennen die Optimierung der Senderseite nicht beeinflusst. Das erkennt man z.B. aus der Gleichung (8) in Tarokh et. al., "Space-Time Codes for high data wireless communication: performance criterion and code construction". Dort wird gezeigt, dass die Verfälschungswahrscheinlichkeit zwischen zwei Sequenzen gleich dem Produkt der Verfälschungswahrscheinlichkeiten für jeweils nur eine Empfangsantenne gebildet werden und alle Produktbestandteile gleich groß sind.
Entsprechend führt die Minimierung eines Produktbestandteils auf die Minimierung des Gesamtprodukts. Das bedeutet, dass die Zahl der Empfangsantennen keinen Einfluss auf die Optimalität der Sendesymbole hat.
Insofern können alle im folgenden beschriebenen Sendeverfahren unverändert für jede Zahl von Empfangsantennen benutzt werden.)

Eine Raum-Zeit-Block-Codierung ("block ST modulation") wird beschrieben als Abbilung von ingesamt $2^l$ verschiedenen Bitvektoren $\vec{b}\in B^l$ (welche jeweils $l$ Bits $\in\{0,1\}$ umfassen) auf einen Satz von $2^l$ Raum-Zeit-Symbolen $C(\vec{q})\in U(n)$, welche als unitäre $n\times n$ Matrizen beschrieben werden durch die Abbildung:

$$STM: B^l \to U(n)$$

$$\vec{b} \to C(\vec{b}) \qquad (1)$$

Die Modulationsrate beträgt R = 1 falls die $l$ Eingabebits in $n$ Symbolen angeordnet sind, wobei ein jedes Symbol aus $l/n$ Bits besteht (z.B. $l/n = 1$ für BPSK und $l/n = 2$ für QPSK).

Somit wird nun die Abbildung von Bitvektoren $\vec{b}_k$ auf die in $n$ Zeitschritten über eine Antenne ausgesandten Symbole (vgl. Fig. 1) ersetzt durch die Abbildung von Bitvektoren $\vec{b}_k$ auf einen Satz von Raum-Zeit-Symbolen (Space-Time symbols ST), die jeweils über $n$ Antennen in $n$ Zeitschritten ausgesandt werden. Somit ist die Anwendung dieser Raum-Zeit-Codes für äußere Sendeblöcke, wie z.B. einen Kanalcodierer, ohne Einfluss ("transparent").

Beim Sender werden die Matrixelemente $c_{ijk}$ der $2^l$ unitären $n$ x $n$ Matrizen $C_k$ als Raum-Zeit-Variablen in folgendem Sinne behandelt: entspricht einem zu übertragenden Bitvektor $\vec{b}_k$ die unitäre $n$ x $n$ Matrix $C_k$ als ST-Symbol, so wird ein dem Matrixelement $c_{ijk}$ (mit Zeilenindex $i$=1,...,$n$, Spaltenindex $j$=1,...,$n$) entsprechendes Signal von der $i$.-ten Antenne im Zeitfenster $j$ ausgesandt. Bei diesem Aufbau beträgt die Übertragungszeitdauer für ein komplettes ST Symbol somit $n$ Zeiteinheiten.

Da alle Matrizen $C_k$ unitär sind, d.h. $C_k^\dagger C_k=C_kC_k^\dagger=1$, sind die Zeilen und Spalten von $C_k$ orthonormal. Dies impliziert, dass die von einer jeden Antenne ausgestrahlte (zeitlich gemittelte) Leistung identisch ist. Weiterhin ist die gesamte Symbolenergie (summiert über alle Antennen) konstant in einem jeden Zeitschlitz. Man beachte, dass die Sendeleistung $E_b$ automatisch normalisiert und unabhängig von $n$ ist, und zwar aufgrund der Tatsache, dass die $C_k$ unitär sind.

Kanalmodell

Im folgenden sei ein Schwundkanal mit einfacher Rayleigh- oder Rice-Verteilung angenommen. Übertragungspfade (von einer jeden Antenne) unterliegen z.B. einem unabhängigen Rayleigh-Schwund in einem jeden Kanalzustand $\alpha_{ij}$ und es sei angenommen, dass sich der Kanal während der Übertragungszeitdauer eines ST Symbols (das entspricht $n$ Zeitschlitzen) nicht wesentlich ändere. Das Signal-Rausch-Verhältnis in einem jeden Kanal sei dasselbe, nämlich $\gamma_b = E_b/N_0$.

Empfänger

Mit dem oben beschriebenen Modulations- und Kanalmodell wird der Empfänger zu einem dem Sendezeitpunkt $j$ entsprechenden, laufzeitversetzten Empfangszeitpunkt ein Signal empfangen, welches aus der Summation aller in einer Matrixspalte (fester Sendezeitpunkt $j$) stehenden Matrixelemente $c_{ijk}$, $j = const.$, für ein bestimmtes Codewort $C_k$, jeweils gewichtet mit einem kanalzustandsspezifischen Schwundfaktor ergibt, wobei noch Rauschen zu berücksichtigen ist. Das heißt, bei der Aussendung eines Codesymbols $C_k$, welches einem Bitvektor $\vec{b}_k$ entspricht, liegt empfängerseitig zu einem laufzeitversetzten Empfangszeitpunkt das Signal (der Empfangsvektor) $r^k_j = \Sigma^n_{i=1} c_{ijk}\alpha_i$ *+Rauschen* an. (Das heißt mit anderen Worten: Der durch $\alpha$ charakterisierte Kanalzustand hängt nicht von dem gesendeten Space-Time Symbol $C_k$ ab und ist für alle $n$ Zeitschlitze konstant.

Im folgenden sei der Index $k$ der Einfachheit halber weggelassen.

Schreibt man den Empfangsvektor als $\vec{r}=(r_1,...,r_n)^T$ und den Kanalzustandvektor als $\vec{\alpha}=(\alpha_1,...,\alpha_n)\in C^n$ so kann dies in Matrixform geschrieben werden als:

$$\vec{r}(\vec{b})=C(\vec{b})\vec{\alpha}+\vec{z}, \qquad (2)$$

wobei $\vec{z}$ den normalverteilten Rauschvektor beschreibt. Somit sind aus Sicht des Empfängers die Empfangssymbole $\vec{r}(\vec{b})$ nicht feststehend, sondern sind ihrerseits ebenfalls stochastisch verteilte Variablen (d.h. sie sind abhängig vom Kanalzustand!). Somit ist die Gesamtmodulation eine Abbildung der Bits auf die $n$-dimensionale komplexe Zahlenebene:

$$B^l \rightarrow U(n) \rightarrow C^n \qquad (3)$$

$$\vec{b} \rightarrow C(\vec{b}) \rightarrow \vec{r}(\vec{b}). \qquad (4)$$

Für einen guten Code muß diese Abbildung natürlich eineindeutig umkehrbar sein, und zwar für jeden Kanalzustand $\vec{\alpha}\neq 0$. Dies legt dem Satz von ST Symbolen $\{C(\vec{b})\}_{\vec{b}\in B^l}$ Randbedingungen auf. In der Tat darf für zwei beliebige Symbole $C(\vec{b}_i)$ und $C(\vec{b}_j)$, $\vec{b}_i\neq\vec{b}_j$ der Euklidische Abstand nicht gleich Null werden, d.h. es muss gelten:

$$\|C(\vec{b}_i)\vec{\alpha}-C(\vec{b}_j)\vec{\alpha}\|_2\neq 0 \qquad (5)$$

und zwar für jeden Zustandvektor $\vec{\alpha}$, der ungleich dem Nullvektor ist.
Insbesondere muss gelten:

$$[C(\vec{b}_i)-C(\vec{b}_j)]\bullet\vec{\alpha}\neq 0$$

für alle $\vec{\alpha}\neq 0$ (Nullvektor).
Ist diese Bedingung erfüllt, so muss eine eindeutige Lösung des vorliegenden linearen Gleichungssystems gegeben sein, d.h. $\det[C(\vec{b}_i) - C(\vec{b}_j)]\neq 0$, wobei die Determinate gleich dem Produkt der Eigenwerte von $[C(\vec{b}_i) - C(\vec{b}_j)]$ ist.
Das Minimieren der Gleichung (4) für alle $\vec{\alpha}$ unter der Bedingung, dass $\|\vec{\alpha}\|=1$, ergibt eine Eigenwertgleichung für die Matrix $C(\vec{b}_i)-C(\vec{b}_j)$.

Somit ist minimale Abstand (welcher durch den "worst case" Kanal $\vec{\alpha}$" mit größter Signalverzerrung festgelegt ist) für ein gegebenes Paar von ST Codes gleich dem minimalen Eigenwert $\lambda_{min}$ von $C(\vec{b})_i-C(\vec{b})_j$. $\lambda_{min}$ muss positiv sein, damit eine Umkehrbarkeit gegeben ist.

Die folgenden Aussagen sind äquivalent:

Die Eigenwerte $\lambda_{min}$ von $C(\vec{b}_i)-C(\vec{b}_j)$ sind für jedes beliebige Paar von ST Symbolen ungleich Null.

Für alle $i,j(i\neq j)$ ist der Rang von $C(\vec{b}_i)-C(\vec{b}_j)$ gleich $n$.
Für alle $i,j(i\neq j)$ darf die Determinante $\det(C(\vec{b}_i)-C(\vec{b}_j))$ nicht verschwinden.

Angesichts Gleichung (2) minimiert ein optimaler MLD-(=minimum likelihood detector)-Detektor den Abstand zu allen möglichen Kanalsymbolen $\vec{r}_j=C(\vec{b}_j)\hat{\alpha}$ , wobei ein Schätzwert $\hat{\alpha}$ für die Kanalzustandsinformation (z.B. durch Pilotsequenzen) verwendet wird:

$$\hat{b} = \arg\min_j \|\vec{r} - C(\vec{b}_j)\hat{\alpha}\| .$$

Aus dem Abstand $\|\vec{r}-C(\vec{b}_j)\hat{\alpha}\|$ kann ein logarithmischer Wahrscheinlichkeitswert ("weiches Symbol") für den Bitvektor $\hat{b}$ abgeleitet werden. Falls die Abbildung der Bits in Symbole (Gray Code oder ähnliches) festgelegt ist (z.B. durch Pilotsequenzen) könnte auch ein LLR-Wert (log likelihood ratio = logarithmisches Wahrscheinlichkeitsverhältnis $\log(L(x)=\frac{P(b=0)}{P(b=1)})$ für ein jedes Bit ermittelt werden.

Existenz von Space-Time-Symbolen (ST-Symbolen) mit maximalem Rang

Die Frage ist, ob es für jede Anzahl $n$ von Antennen einen Satz von $2^l$ ST Symbolen (Matrizen $C_k$) gibt, mit der Eigenschaft, dass sie einen maximalen Rang aufweisen. D.h., es ist

$$d_{\min} = \min_{i \neq j} |\det(C_i - C_j)| \qquad (9)$$

für alle Paare von $C_i, C_j$ zu ermitteln.

Für unitäre *n x n* Matrizen gilt dabei, dass ihr Rang jeweils gleich *n* ist. Die entscheidende Frage für die erfindungsgemäß betrachteten ST-Codes ist nun, ob auch alle Differenzen der ausgewählten Matrizen vollen Rang (*n*) haben.

Falls wir einen Satz von Matrizen $C=\{C_i\}$ auf solch eine Weise konstruieren können, dass sie im Sinne der üblichen Matrizenmultiplikation eine Gruppe bilden, vereinfachen sich die Dinge:

Lemma 1:

Sei $C=\{C_i\}$ eine Gruppe. Falls $C_1$=1 die Einheitsmatrix der Gruppe ist, dann gilt

$$d_{\min} = \min_{i \neq 1} |\det(1 - C_i)|.$$

Beweis:

Aufgrund der Gruppeneigenschaft ist $C^{-1}{}_i = C^{\dagger}{}_i \in C$. Somit ist $C_j C^{-1}{}_i = C_k \in C$ und es gilt $\min_{ij} = |\det(C_i - C_j)| = \min_{ij} |\det(1 - C_j C^{\dagger}{}_i)| = \min_k |\det(1 - C_k)|$.

Hierbei wurde zusätzlich davon Gebrauch gemacht, dass $|\det(C)|=1$.

Beispiel 1:

Das Alamouti-Schema beruht auf

$$C = \frac{1}{2}\begin{pmatrix} 1 \pm j & 1 \pm j \\ -1 \pm j & 1 \mp j \end{pmatrix}$$

etc.

Tatsächlich besteht das Alamouti-Schema aus einer Untermenge der Würfel-Gruppe (cube group) mit der Ordnung $o$=24. Acht der Gruppenelemente werden nicht benutzt, obwohl sie dasselbe $d_{\min}$=1 ergeben. Somit könnten in diesem Schema im Prinzip $ld(24)>4$ Bits ohne Informationsverlust übertragen werden. (Jedoch haben die nichtübertragenen Symbole einen schlechten Scheitel-Faktor ("crest-factor"), z.B. $C$=1).

Aus der bereits erwähnten Veröffentlichung "Space Time Codes for High Data Wireless Communication: Performanve Criterion and Code Construction" von V. Tarokh ist bekannt, dass der Rang *n* von als Raum-Zeit-Block-Symbolen konstruierten *n x n* Codematrizen gleich dem Diversitätsgrad ist. Daraus folgt auch, dass der Rang der Differenz zweier *n x n* Codematrizen maximal *n* ist. Diese Erkenntnis wird nun im folgenden ausgenutzt.

Komplexwertige Symbole

Theorem 2:

Für beliebiges *l* und $n \geq 2$ exisitiert ein komplexwertiges ST Modulationsschema mit einem Diversitätsgrad von *n*.

Beweis: durch explizite Konstruktion

Man beachte, dass in diesem Falle der ST Code $\{C_k(b_k)\}_{\vec{b} \in B_l}$ aus einer Untermenge aller möglichen unitären *n x n* Matrizen besteht. Aufgrund des in Simon, Barry: Representations of Finite and Compact Groups, 1996, Graduate Studies in Mathematics, American Mathematical Society, ISBN 0-8218-0453-7 angegebenen Spektraltheorems kann jede unitäre Matric C geschrieben werden als:

$$C = V\begin{pmatrix} \lambda_1 & & 0 \\ & \cdots & \\ 0 & & \lambda_n \end{pmatrix}V^{-1}$$

wobei $V$ unitär ist und $\lambda_i=\exp(j\beta_i)$ (im Argument der Funktion exp ist j die imaginäre Einheit). Man wähle nun $\beta_i=\frac{2\pi}{2^l}q_i$, wobei $q_i$ eine beliebige ungerade ganze Zahl sei. Dann gilt $C^{2^l}=1$, und $\{C_k\}_{k=0\ldots2^l-1}$ ist eine (Abelsche) Gruppe, mit einer Erzeugenden

$$C = V\begin{pmatrix} \exp(\frac{2\pi j}{2^l}q_1) & & 0 \\ & \cdots & \\ 0 & & \exp(\frac{2\pi j}{2^l}q_n) \end{pmatrix}V^{-1} \qquad (7)$$

für jedes beliebige feste $V$. Die Eigenwerte von $C_k$ sind $\lambda^k_i = \exp(\frac{2\pi j}{2^l}q_i k)$.

Durch Konstruktion mit $k$=0...$2^l$-1 sind sie eindeutig verschieden von 1. Hiervon ausgehend ist zu zeigen, dass $d_{\min}=\min_{k\neq0}|\det(1-C_k)|\neq0$ .

Da $|\det(V)|=1$, gilt:

$$d_{\min} = \min_{k\neq0}\left|\det\left(1-\begin{pmatrix} \lambda_1 & & 0 \\ & \cdots & \\ 0 & & \lambda_n \end{pmatrix}^k\right)\right| = \min_{k\neq0}\left|\prod_{i-1}^{n}(1-\lambda_i^k)\right|\neq 0\ .$$

Man beachte, dass der Schlüssel zu obigem Beweis darauf beruhte, dass es immer möglich ist, einen Satz unitärer Matrizen zu konstruieren, deren Eigenwerte alle verschieden von 1 sind.

Damit liefert Gleichung (7) die Grundlage für ein Verfahren zur Konstruktion von komplexwertigen unitären $n \times n$ Codematrizen $C_k$, die als Symbolworte für Raum-Zeit-Block-Codes für eine beliebige Anzahl von $n\geq2$ Sendeantennen dienen können, wobei diese Raum-Zeit-Block-Codes eine maximale Diversität $n$ liefern, da der Rang der komplexwertigen unitären $n \times n$ Codematrizen $C_k$ gleich $n$ ist.

Berechnet man eine Gruppe von Codematrizen nach der obigen Gleichung (7) so erhält man also eine Liste von $2^l$ unitären $n \times n$ Matrizen mit komplexwertigen Matrixelementen, welche einem nichtlinearen Raum-Zeit-Block-Code zugrundegelegt werden können, mit dem eine der in Fig. 2 schematisch gezeigte Funkübertragungsstrecke in einem digitalen Mobilfunknetz betrieben werden kann. Dieser Erkenntnis liegt die technische Lehre des Anspruchs 1 zugrunde.

Für den Fall $n$=3 Sendeantennen und BPSK-Modulation, d.h Anzahl der Sendeantennen $n$ = Länge der Symbolworte $l$, ist der Anschaulichkeit halber ein explizites Beispiel für eine solche Liste von Codematrizen $C_k$ in der Nachschlagetabelle in Fig. 3 angegeben.

In der in Fig. 1 gezeigten Nachschlagetabelle werden die Bits $b_i\in\{0,1\}$ auf $2^3$=8 Bitvektoren abgebildet. Diese sind explizit die durch Permutationen gebildeten acht möglichen Bitvektoren (0,0,0); (0,0,1); (0,1,1); (0,1,0); (1,1,0); (1,1,1); (1,0,1); (1,0,0).

Diese acht Bitvektoren werden eineindeutig (umkehrbar eindeutig) jeweils einer von acht Codematrizen $C_k$ = C(:;:k) zugeordnet. Dabei sind die Codematrizen in Tabelle 1 unitäre komplexwertige 3 $x$ 3 Codematrizen, deren Matrixelemente nach Gleichung (7) berechnet worden sind.

Verwendet man die in Fig. 3 gezeigte beispielhaft getroffenen Zuordnung zwischen den acht Bitvektoren und den acht Codematrizen $C_k$ z.B. bei einer in Fig. 2 gezeigten digitalen Mobilfunksystem und kommt dort beispielsweise ein Bitvektor (1,0,1) am ST-Codierer an, so sendet dieser in drei aufeinanderfolgenden Zeitschlitzen je eine Spalte der Codematrix C, aus, und zwar so, dass über die Antenne 1 im Zeitschlitz 1 das komplexwertige Matrixelement $c_{117}$=0,0000+0,6442$i$ = ausgesandt wird, über die Antenne 2 im Zeitschlitz 1 das komplexwertige Matrixelement $c_{217}$=-0,2175-0,0412$i$ usw., bis über die Antenne 3 im Zeitschlitz 3 das komplexwertige Matrixelement $c_{337}$=0,0000-0,5065$i$ ausgesandt wird (in der Fig. 3 ist i für die imaginäre Einheit verwendet worden).

Empfängerseitig wird dann aus den von einer Empfangsantenne Rx empfangenen Signalen wie weiter oben bereits erläutert mittels eines MLD-Detektors wieder die komplette Codematrix *C*, rekonstruiert und dieser in einer Umkehrabbildung wiederum der ursprüngliche Bitvektor (1,0,1) zugeordnet.

Für den praktischen Gebrauch sind also lediglich die nach Gleichung (7) berechneten Matrizen mit der jeweiligen Bitvektorzuordnung in einer Nachschlagetabelle in Form der in Fig. 3 gezeigten Tabelle in einem Speicher eines senderseitigen ST-Codierers zu speichern und entsprechend eine identische Nachschlagetabelle in einem empfängerseitigen ST-Decodierer.

Der senderseitige ST-Codierer kann in einer Basisstation eines digitalen Mobilfunknetzes integriert sein, und der empfängerseitige ST-Decodierer in der Mobilstation eines eines digitalen Mobilfunknetzes. Grundsätzlich kann dies aber auch umgekehrt sein.

Die Nachschlagtabellen können als Computerprogrammprodukte in maschinenlesbarer Form z.B. auf Diskette gespeichert sein, oder in Form von über das Internet oder die Funkübertragungsstrecken übertragbaren maschinenlesbaren Dateien abgespeichert sein, und bei Bedarf in entsprechende Speicher von senderseitigen ST-Codierern oder empfängerseitigen ST-Decodierern in die Basisstationen oder Mobilstationen in einem digitalen Mobilfunknetz eingespeist werden.

Reellwertige Symbole

Für reellwertige Symbole trifft die im obigen zu Gleichung (7) führenden Konstruktionsbeweis ausgenutzte Eigenschaft, dass es immer möglich ist, einen Satz unitärer Matrizen zu konstruieren, deren Eigenwerte alle verschieden von 1 sind, nicht mehr zu.

Reellwertige ST Codes

Beschränkt man die ST Code Matrizen auf reellwertige Matrixelemente $c_{ijk}$, so kann ein maximaler Rang (und somit eine maximale Diversitätsordnung der ST Codes) nurmehr für den Fall geradzahliger Antennen konstruiert werden.

Theorem 3:

Reellwertige ST Codes der Ordnung $2n+1$ haben eine nichtmaximale Diversitätsordnung.

Beweis:

Ein beliebiges $O \in SO(2n+1)$ kann geschrieben werden als

$$O = VDV^{-1} \qquad (8)$$

(vgl. Simon, Barry: Representations of Finite and Compact Groups, 1996, Graduate Studies in Mathematics, American Mathematical Society, ISBN 0-8218-0453-7),
wobei V orthogonal ist und

$$D = \begin{pmatrix} \begin{pmatrix} \cos\Phi_1 & -\sin\Phi_1 \\ \sin\Phi_1 & \cos\Phi_1 \end{pmatrix} & & & 0 \\ & \begin{pmatrix} \cos\Phi_2 & -\sin\Phi_2 \\ \sin\Phi_2 & \cos\Phi_2 \end{pmatrix} & & \\ & & \cdots & \\ 0 & & & 1 \end{pmatrix}$$

(Für Matrizen mit $\det O = -1$ ist der Beweis im wesentlichen identisch).

Man betrachte nun $\det(O_1 - O_2) = \det(1 - O_2 O^{-1}{}_1) = \det(1 - O_{21})$,
wobei aufgrund der Gruppenstruktur wiederum $O_{21} \in SO(2n+1)$ gilt. Somit hat $O_{21}$ wiederum die Struktur gemäß Gleichung (8) und die Determinate $\det(O_1-O_2)$ verschwindet.

Der Grund, warum $SO(2n+1)$ keine maximale Diversitätsordnung liefert, beruht somit auf der Tatsache, dass jede orthogonale Matrix mit ungerader Dimension (zumindest) einen Eigenwert hat, welcher gleich 1 ist.

Für eine gerade Anzahl von Antennen tritt die zusätzliche 1 an der Position $(n,n)$ von D nicht auf, und eine Codekonstruktion ähnlich zu dem unitären Fall ist möglich.

ST Symbol Optimierung

Obwohl das Theorem für die komplexwertige ST Modulation konstruktiv ist, liefert sie keinen optimalen ST Code. Der asymptotische Symbolfehler ist von der Form

$$P_e \sim c\left(\frac{E_b}{N_0}\right)^{-n},$$

wodurch eine optimale Diversitätsordnung für große $\frac{E_b}{N_0}$ auftritt. Jedoch ist die Konstante $c$ nicht minimal.

Deshalb werden im folgenden praktische Verfahren zur CodeKonstruktion basierend auf Optimierungsüberlegungen vorgestellt. Die Ergebnisse sind durch Simulationen bestätigt worden.

In den nachfolgenden Abschnitten werden Konstruktionsverfahen für "gute" unitäre ST Codes aufgezeigt, d. h. solche ST Codes, bei denen die Abstände zwischen den Codesymbolen optimiert sind.

Optimierung

Die Idee besteht darin, eine passende Parametrisierung für einen Satz von unitären $U(n)$ Matrizen zu finden, und dann numerisch eine passende Metrik zu minimieren, welche die Abstände zwischen den Code-Wörtern repräsentiert. Da das Entfernungsmaß $d_{ev}=\min\{Eigenwerte\ von\ C(\beta_i)-C(\beta_j)\}$ nicht differenzierbar ist, wählen wir

$$d_{ij} := d(C(\vec{\beta}_i),C(\vec{\beta}_j))=|\det(C(\vec{\beta}_i)-C(\vec{\beta}_j))|.$$

Dabei steht $\vec{\beta}_k$ für die Parameter der $k$-ten Code-Matrix $C_k$. Als Zielfunktional

$$E_q[\vec{\beta}_1,\vec{\beta}_2,\ldots]=\left(\sum_{i<j}^{2^l}\left[d(C(\vec{\beta}_i),C(\vec{\beta}_j))\right]^q\right)^{\frac{1}{q}} \qquad (6)$$

for globale Extremalwertbildung können wir die $L_q$-Norm aller wechselseitigen Code-Abstände verwenden. Z.B. liefert $q \rightarrow -\infty$ die minimale Norm (ein großes negatives $q$ kann verwendet werden für eine numerische Optimierung); der Fall mit $q$=-1 kann als elektrisches Potential interpretiert werden. Tatsächlich ist aufgrund der Kompaktheit von $U(n)$ das Problem vergleichbar mit dem Minimieren der elektrischen Energie von $2^l$ gleichgeladenen Teilchen, die sich auf einer Kugel bewegen. Positive Werte für $q$ sind nicht sinnvoll, da sie keine Entfernungen ausschließen, die Null werden könnten (d.h zwei Teilchen, die am selben Ort sitzen, erzeugen keine unendliche Energie, so dass sie sich nicht abstoßen würden).

Der Fall der Gruppe SU(2)

Dieser Fall entspricht $n$=2 Sendeantennen.

Für diesen Fall kann man explizit die oben erläuterte Energiefunktion konstruieren, da gemäß Simon Barry, "Representation of Finite and Compact Groups", Graduate Studies in Mathematics, Volume 10, American Mathematical Society jede unitäre Matrix C parametrisiert werden kann als

$$C = 1\beta_0 + j(\beta_1\sigma_1 + \beta_2\sigma_2 + \beta_3\sigma_3) := \vec{\beta}\cdot\vec{\sigma}$$

wobei $\vec{\sigma}_i$ die bekannten Pauli-Spinmatrizen sind:

$$\vec{\sigma}_1 = \begin{pmatrix} 0 & 1 \\ 1 & 0 \end{pmatrix}, \quad \vec{\sigma}_2 = \begin{pmatrix} 0 & -j \\ j & 0 \end{pmatrix}, \quad \vec{\sigma}_3 = \begin{pmatrix} 1 & 0 \\ 0 & -1 \end{pmatrix},$$

und hier $j$ die imaginäre Einheit ist.

Dabei unterliegen die reellwertigen Paramter β der Beschränkung

$$\sum_{i=0}^{3} \beta_i^2 = 1 .$$

Tatsächlich sorgt dies dafür, dass SU(2) isomorph ist zu einer 3-Kugel (einer Kugel in vier Dimensionen). Man kann leicht zeigen, dass $\det(C(\vec{\beta}_i)-C(\vec{\beta}_j))=2-2\vec{\beta}_i\bullet\vec{\beta}_j$ ist, deshalb definieren wir

$$d_{ij}=\sqrt{1-\vec{\beta}_i\bullet\vec{\beta}_j}$$

als Entfernungsmaß zwischen zwei Codematrizen.
Man beachte, dass $d_{ij}$ wirklich eine Metrik im Fall $SU(2)$ ist.

Als vollständigen Abstand verwenden wir $d=\Sigma_{i<j}d_{ij}$. Eine 3-Kugel wird in einfacher Weise durch drei Winkel parametrisiert:

$$\vec{\beta}_i = \begin{pmatrix} \sin\Phi_{i3} & \sin\Phi_{i2} & \sin\Phi_{i1} \\ \cos\Phi_{i3} & \sin\Phi_{i2} & \sin\Phi_{i1} \\ & \cos\Phi_{i2} & \sin\Phi_{i1} \\ & & \cos\Phi_{i1} \end{pmatrix}$$

Der Gradient ist dabei:

$$\frac{\partial}{\partial\Phi_{kl}} d = -\left(\frac{\partial}{\partial\Phi_{kl}} \vec{\beta}_k\right) \bullet \sum_{i\neq k} \frac{\vec{\beta}_i}{d_{ik}}$$

Optimierungsverfahren basierend auf der des steilsten Abstiegs liefern schnell Ergebnisse für ein vernünftiges $l$.

Das sich ergebende Code-Spektrum für QPSK ($l$=4) ist in Fig. 5 mit dem Code-Spektrum für das Alamouti-Schema verglichen. Wie man sieht ist der minimale Abstand bei dieser Vorgehensweise größer als der im Falle des Alamouti-Schemas. Somit ist im asymptotischen Grenzfall zu erwarten, dass dieser nicht-lineare Code einen höheren Codierungsgewinn (gleiche Bitfehlerquote bei geringerem Signal- zu Rauschverhältnis) zeigt.

$SU(3)$ und ein impliztes numerisches Gradientenverfahren

Für die Fälle mit mehr als zwei Sendeantennen, also $SU(n)$, $n>2$, wird die explizite Berechnung von Determinanten sehr umfangreich. Für Gradientenverfahren (z.B. dem konjugierten Gradientenverfahren, siehe W. Press, B. Flannery, S. Tenkolsky, W. Vetterling: "Numerical recipes in C", Cambridge University Press, ISBN 0-521-35465-X ) ist es jedoch ausreichend, den lokalen Gradienten zu berechnen.

Wir definieren den $L_m$-Abstand der $i$.-ten Matrix zu allen anderen als:

$$d_i^m = \sum_j |\det(C_j - C_i)|^m = \sum_j |\det(1 - C_j^\dagger C_i)|^m := \sum_j |\det(1 - A_{ij})|^m . \quad (9)$$

Variiert man die *i*.-te Code-Matrix durch eine infinitesimale (unitäre) Rotation

$$C_i \to C_i \exp(j\, \vec{\sigma} \bullet \vec{\delta}_i) \approx C_i + j \vec{\delta}_i \bullet C_i \vec{\sigma}$$

so ergibt sich für den Gradienten

$$\vec{\nabla}_{\delta_i} d_i^m := \vec{g}_i = n \sum_{j \neq i} | d_{ij} |^n \operatorname{Re} Tr(A_{ij}^{-1} \vec{B}_{ij}) \qquad (10)$$

wobei

$$\vec{B}_{ij} = -jC_j^{\dagger} C_i \vec{\sigma}.$$

Dabei sind die $\sigma_i$ die entsprechenden Hermite'schen Standard-Spinmatrizen. Für höherdimensionale Räume ($n > 2$) sind diese z.B. in dem Buch "Gauge theory of elementary particle physics" von Ta-Pei Cheng und Ling-Fong Li angegeben.

Eine Variation mit einer Schrittweite δ wird dann auf das *i*.-te Codewort angewandt gemäß

$$C_i \to C_i \exp(j\delta \vec{\sigma} \bullet \vec{g}_i) \qquad (11)$$

Ein Algorithmus mit steilstem Abstieg funktioniert dann wie folgt:

1.) Erzeuge eine zufällige Menge von$2^l$ unitären $n \times n$ Matrizen $S_k$,$k$=1...$2^l$ als Startmatrizen (das kann also gemäß Gleichung (7) geschehen).

2.) Berechne die Gradientenvektoren gemäß Gleichung (10).

3.) "Drehe" die Matrizen gemäß der Gleichung (11), iteriere dann gemäß Schritt 2.)

Selbstverständlich kann ein konjugiertes Gradientenverfahren auf die entsprechende Weise konstruiert werden, und es sind auch stochastische Gradientenverfahren zum Finden des globalen Extremwertbildners möglich.

Ein Beispiel für 3 Antennen und eine QPSK Modulation, welches $2^6$=64 ST Matrizen liefert, ist in Fig. 6 gezeigt. Fig. 6 zeigt ein Spektrum für SU(3), also drei Sendeantennen, und QPSK Modulation unter Verwendung einer Minimalnorm. Verwendet man dasselbe Verfahren für *SU*(3), aber für eine BPSK Modulation und wendet verschiedene Normen (min, $L_{-1}$, $L_{-2}$ )so erhält man die in Fig. 7 gezeigten Spektren.

Es scheint bemerkenswert, dass es möglich ist, acht Codematrizen in *SU*(3) zu finden, welche alle denselben wechselseitigen Abstand zeigen. Dies entspricht einem Thetraeder im gewöhnlichen dreidimensionalen Raum.

Fig. 4 zeigt eine zweidimensionale Veranschaulichung für diesen Fall. Die acht Bitvektoren (0,0,0); (0,0,1); (0,1,1); (0,1,0); (1,1,0); (1,1,1); (1,0,1); (1,0,0) werden auf acht Codematrizen (z.B. die in der Tabelle in Fig. 3 explizit angegebenen Codematrizen abgebildet), die optimale Abstände zueinander haben.

Fig. 8 zeigt ein Spektrum für $n$=3 Antennen und BPSK unter Verwendung verschiedener Optimierungskriterien.

Neben den obenstehend erläuterten numerischen Optimierungsverfahren gibt noch weitere Ansätze für eine Code-Optimierung, also die explizite Konstruktion von ST Symbolen in Form unitärer $n \times n$ Matrizen mit jeweils optimierten Abständen zueinander:

Konstruktion von Hyperkugeln:

Man konstruiere eine (Hyper-)Kugel mit einem gegebenen Radius um ein gegebenes Codesymbol (z.B. eine unitäre $n \times n$ Matrix $C_k$), finde ein zweites Codesymbol auf der Kugel um dieses erste Codesymbol, und konstruiere ein drittes Symbol als Schnittpunkt der (Hyper)-Kugeln und das erste und das zweite Codesymbol. Dann konstruiere man entsprechend iterativ weitere Codesymbole als Schnittpunkte weiterer (Hyper)-Kugeln um die jeweils schon gefundenen Codewörter.

Im Falle, dass die Codewörter unitäre $n \times n$ Matrizen mit $n \geq 2$ sind, ist eine "Kugel" mit Radius $r$ um ein Codewort gegeben durch $S_r=\{C'|\det(C'-C)=r\}$.
Sie kann konstruiert werden durch

$$r = \det(C-C')=\det(1-C^{\dagger}C')= \det(1-\exp(j\vec{\sigma}\vec{\beta}))=\Pi_{i=1}^{n}(1-\exp(\lambda_i)),$$

wobei $\lambda_i$ die Eigenwerte von $j\vec{\sigma}\,\vec{\beta}$ sind.

Zum Beispiel findet man in $SU(2)$, dass

$$r = 4 \sin^2 (1/2 \sqrt{\beta_1^2 + \beta_2^2 + \beta_3^2}).$$

Somit kann eine solche Kugel parametrisiert werden als $C'=C\exp(j\vec{\sigma}\vec{\beta})$ mit einer Beschränkung der Summe der quadrierten $\beta$*'s*.

Eine Kugel mit Radius 1 ist z.B. gegeben durch

$$S_1(C) = \{C \exp(j\vec{\sigma}\vec{\beta})|\beta_1^2 + \beta_1^2 + \beta_1^2 = \pi^2/9, -\pi/3 \leq \beta_i \leq \pi/3\}.$$

Verwendet man diese Idee, so kann man tatsächlich das Alamouti-Schema konstruieren (durch Konstruktion zweier Kugeln mit dem Radius 1 um die Elemente 1 und -1 (das Zentrum von $SU(2)$,...$Z(SU(2))$).

Dies liefert für die Codewörter die Formel

$$C = \exp\left(j\frac{\pi}{3\sqrt{3}}(1+b_o)\sum_{i=1}^{3}(1-2b_i)\sigma_i\right),$$

wobei $b_i \in \{0,1)$ die Bits sind und $\sigma_i$ die Hermite' schen Standard-Spinmatrizen.

Explizite Berechnung führt wieder zu dem bereits bekannten Alamouti-Schema, was also die Richtigkeit des Ansatzes der Konstruktion über Hyperkugeln belegt.

Wie das Beispiel des Alamouti-Schemas in Verbindung mit Fig. 5 zeigt, kann man mit dem Hyperkugel-Verfahren ein lokales Optimum finden, man findet aber nicht zwingenderweise ein globales Optimum.

Allerdigs werden für $n$>2 die Eigenwerte von $j\vec{\sigma}\vec{\beta}$ (analytisch) sehr umfangreich.

Deshalb erscheint für $n$>2 eine andere Parametrisierung hier erfolgreicher:

$$r=\det(1-C^{\dagger}C')= \det(1-VDV^{\dagger})= \det(1-D)=\Pi_i(1-\exp(j\lambda_i))$$

Hält man die Eigenwerte $\lambda_i$=*const.*, so ergibt sich eine Kugel um das Codesymbol C mit

$$C'=CVDV^{\dagger}.$$

Dabei kann $V$ parametrisiert werden als $V=\exp(j\vec{\sigma}\vec{\beta})$.

Unitäre Darstellungen finiter Gruppen

Eine weitere Methode zur Codekonstruktion basiert auf der Verwendung endlicher Gruppen. Hierzu sei wieder auf Simon Barry, "Representation of Finite and Compact Groups", Graduate Studies in Mathematics, Volume 10, American Mathematical Society verwiesen. Die Verknüpfung zweier Elemente in einer endlichen Gruppe führt wieder auf eine Element der Gruppe, da nach einem Gruppenaxiom die Gruppe abgeschlossen ist. Daneben liefert die Multiplikation zweier unitärer Matrizen ebenfalls wieder eine unitäre Matrix. Entsprechend gibt es zahlreiche Darstellungen von endlichen Gruppen, bei denen jedem Gruppenelement eine unitäre Matrix zugeordnet wird. Wählt man eine solche Darstellung einer endlichen Gruppe, wobei die Zahl der Gruppenelemente größer als $2^l$ ist, so erhält man gute Startwerte für die oben angeführten Optimierungsverfahren.

Hierzu versuche man die unitären Darstellungen von finiten Gruppen (mit der Dimension $n$) zu finden, bei denen $o(G)\geq 2^l$ ist. Es gibt keine Gewähr, dass dies zu optimalen Ergebnissen führt.

Einige Simulationsergebnisse:

Simulationen sind für die Fälle mit $n$=2 und $n$=3 Antennen ausgeführt worden, wobei (gegenwärtig) nur BPSK benutzt wurde. Theoretische Grenzen für die Antennendiversität können in geschlossener Form (vgl. z.B. J. Proakis, M. Salehi: "Communications Systems Engineering", Prentice Hall Int., ISBN 0-13-300625-5, 1994)abgeleitet werden. Diese sind als durchgezogene Linien in der Fig. 9 zu sehen. Simulationsergebnisse sind zusammen mit 70% Konfidenzintervallen gezeigt.

Wie Fig. 10 zu entnehmen ist, wird die theoretische Grenze für hohes $E_b/N_0$ im Falle dreier Antennen für den $L_{\min}$ - Code erreicht. Dies beruht auf der Tatsache, dass $L_{\min}$ wirklich der maximal mögliche geringste Abstand ist. Für ein gutes Signal-Rausch-Verhältnis tragen praktisch nur die Fehler bei geringsten Abständen einen Anteil bei.

Jedoch verschlechtern sich bei niedrigem Signal-Rausch-Verhältnis die Eigenschaften des Codes und können sogar schlechter werden als bei einer Diversität von zwei Antennen. In der Tat können ST Codes als Schema höherer Modulationangesehen werden (wodurch der Symbol-Raum ausgeweitet wird). Es ist selbstverständlich nicht möglich die Anzahl der Symbole zu vergrößen, ohne die Abstände in einem kompakten Raum zu verkleinern. Für QPSK (mit 64 ST Symbolen) wird dieses Problem sogar noch wichtiger.

Für den $L_{-1}$-Code ist die Leistungsfähigkeit in den Bereichen mit niedrigem Signal-Rausch-Verhältnis besser. Für diesen Code (welcher zwei verschiedene Abstände aufweist in der minimalen Eigenwertnorm) wurde Gray Codierung angewendet, um Vielfach-Bit-Fehler im Falle eines Symbolfehlers zu vermeiden. Wie in dem Spektrum unten zu sehen ist, hat jede Codematrix genau zwei nächste Nachbarn. Alle anderen Codewörter haben einen größeren Abstand. Wie zu sehen ist, ist der Code nahe am theoretischen Limit für $E_b/N_0$ > 4 dB und übertrifft den $L_{\min}$-Code im Bereich mit niedrigem $E_b/N_0$.

## Patentansprüche

1. Verfahren zum Betreiben eines digitalen Mobilfunknetzes mit orthogonal aufgebauten Raum-Zeit-Block-Übertragungscodes mit maximaler Diversität $n$ x $m$ für eine gegebene Anzahl von $n$ Sendeantennen und m,m=1,2,3,4..., Empfangsantennen, wobei eine sendende Station des Mobilfunknetzes mit $n,n$ = 2, 3, 4..., Sendeantennen versehen ist, und ein von dieser sendenden Station zu übertragender Satz von $2^l$ Informationsbitvektoren $\vec{b}=(b_1,b_2,\ldots b_l)\in B^l$ mit $l$ Bits $b_i \in \{0,1\}$ durch eine eineindeutige

$$STM : B^l \rightarrow U(n)$$

Abbildung

$$\vec{b} \rightarrow C(\vec{b})$$

auf einen Satz von $2^l$ Raum-Zeit-Symbolen $C_k$, $k$=0, 2, ...,$2^l$-1 abgebildet wird, wobei jedes Codesymbol$C_k$ einer unitären $n\times n$ Matrix entspricht und die Matrixelemente $c_{ijk}$ eines jeden der $2^l$ Codesymbole $C_k$ so als Raum-Zeitvariable aufgefasst werden, dass bei Übertragung eines bestimmten der $2^l$ Codesymbole $C_k$ für jedes seiner Matrixelemente $c_{ijk}$ ein entsprechendes Signal von der Sendeantenne $i$ in einem Zeitintervall $j$ über einen der Sendeantenne $i$ zugeordneten Schwundkanal abgestrahlt wird, so dass an einer jeden von $m$ Empfangsantennen einer sich in der Reichweite der sendenden Station befindlichen empfangenden Station die im Zeitintervall $j$ abgestrahlten und den Matrixelementen $c_{ijk}$, $i$=1,...,$n$ des Codesymbols $C_k$ entsprechenden Signale empfangen werden, und wobei aufgrund der orthogonalen Struktur des Raum-Zeit-Block-Übertragungscodes und durch Entkoppeln der von den $n$ Sendeantennen ausgesandten, den Matrixelementen $c_{ijk}$ entsprechenden Signalen ein entsprechender zu übertragender Informationsbitvektor $\vec{b}\in B^l$

$$STM^{-1}: U(n)\rightarrow B^l$$

durch die Umkehrabbildung

$$C(\vec{b})\rightarrow\vec{b}$$

decodiert wird,
**dadurch gekennzeichnet,**
**dass** die den zu übertragenden Signalen entsprechenden Matrixelemente $c_{ijk}$ die Elemente von $2^l$ unitären $n \times n$ Matrizen $C_k$, $k$= 0, 2, ...,$2^l$-1 sind, die nach folgender Vorschrift konstruiert sind:

$$C_k = \begin{pmatrix} c_{11k} & & c_{1nk} \\ & .... & \\ c_{n1k} & & c_{nnk} \end{pmatrix} = V \begin{pmatrix} \exp(\frac{2\pi j}{2^l} q_1 k) & & 0 \\ & .... & \\ 0 & & \exp(\frac{2\pi j}{2^l} q_n k) \end{pmatrix} V^{-1},$$

wobei $V$ eine beliebige unitäre komplexwertige $n \times n$ Matrix ist,
$c_{ijk}$ die im allgemeinen Fall komplexwertigen Matrixelemente von $C_k$,
$j$ die imaginäre Einheit,
$q_i$, $i$ = 1,...,$n$ beliebige ungerade ganze Zahlen,
und $k$ = 0, 1, ...,$2^l$ - 1.

**2.** Verfahren nach Anspruch 1,
**dadurch gekennzeichnet, dass** $n$ geradzahlig und die $c_{ijk}$ reellwertig sind.

**3.** Verfahren nach Anspruch 1,
**dadurch gekennzeichnet,**
**dass** die den zu übertragenden Signalen entsprechenden Matrixelementen $c_{ijk}$ die Elemente von $2^l$ unitären $n \times n$ Matrizen $C_k$, $k$=0, 2, ...,$2^l$-1 sind, die nach folgender Vorschrift numerisch optimiert sind:

a) es ist ein anfänglicher Satz von $2^l$ unitären $n \times n$ Ausgangsmatrizen $S_k$, $k$=0, 2, ...,$2^l$-1 numerisch zufällig erzeugt worden;
b)diese Ausgangsmatrizen $S_k$, $k$=0, 2, ...,$2^l$-1 sind parametrisiert worden;
c)es ist als Entfernungsmaß zwischen zwei Ausgangsmatrizen die Größe $d_{ij} := d(S(\vec{\beta}_i),S(\vec{\beta}_j))=|\det(S(\vec{\beta}_i)-S(\vec{\beta}_j))|$ gewählt worden, wobei $\vec{\beta}_i$ für die Parameter der $i$-ten Ausgangsmatrix steht;
d)durch numerische Variation der Parameter $\vec{\beta}_i$ ist das Zielfunktional

$$E_q[\vec{\beta}_1,\vec{\beta}_2,...] = \left(\sum_{i<j}^{2^l} \left[d(S(\vec{\beta}_i),S(\vec{\beta}_j))\right]\right)^{\frac{1}{q}}$$

minimiert worden;
e)die $n \times n$ Matrizen, für deren Parameter $\vec{\beta}_i$ das Zielfunktional

$$E_q[\vec{\beta}_1,\vec{\beta}_2,...] = \left(\sum_{i<j}^{2^l} \left[d(C(\vec{\beta}_i),C(\vec{\beta}_j))\right]\right)^{\frac{1}{q}}$$

numerisch minimiert worden ist, sind als endgültige $n \times n$ Matrizen, die jeweils einem Codesymbol $C_k$ entsprechen, gewählt worden und ihre Matrixelemente sind als die den zu übertragenden Signalen entsprechenden Matrixelemente $c_{ijk}$ gewählt worden.

**4.** Verfahren nach Anspruch 3, **dadurch gekennzeichnet** , dass $n$=2 und

a) dass jede Matrix $S_k$ des anfänglichen Satzes unitärer $n \times n$ Ausgangsmatrizen als $S=1\beta_0+j(\beta_1\sigma_1+\beta_2\sigma_2+\beta_3\sigma_3):=\vec{\beta}\bullet\vec{\sigma}$ parametrisiert worden ist,
wobei für die $\sigma_i$ gilt:

$$\sigma_1=\begin{pmatrix}0 & 1\\ 1 & 0\end{pmatrix},\quad \sigma_2=\begin{pmatrix}0 & -j\\ j & 0\end{pmatrix},\quad \sigma_3=\begin{pmatrix}1 & 0\\ 0 & -1\end{pmatrix}$$

und $j$ die imaginäre Einheit ist,
und die reellwertigen Parameter β der folgenden Beschränkung unterliegen:

$$\sum_{i=0}^{3}\beta_i^2=1\,;$$

b) dass $d_{ij}=\sqrt{1-\vec{\beta}_i\bullet\vec{\beta}_j}$ als Entfernungsmaß zwischen zwei Matrizen $A_i,A_j$ gewählt worden ist;
c) dass die Parametervektoren $\vec{\beta}_i$ als

$$\vec{\beta}_i=\begin{pmatrix}\sin\Phi_{i3} & \sin\Phi_{i2} & \sin\Phi_{i1}\\ \cos\Phi_{i3} & \sin\Phi_{i2} & \sin\Phi_{i1}\\ & \cos\Phi_{i2} & \sin\Phi_{i1}\\ & & \cos\Phi_{i1}\end{pmatrix}$$

parametrisiert worden sind,
d) dass die Gradienten

$$\frac{\partial}{\partial\Phi_{kl}}d=-\left(\frac{\partial}{\partial\Phi_{kl}}\vec{\beta}_k\right)\bullet\sum_{i\neq k}\frac{\vec{\beta}_i}{d_{ik}}$$

für alle Matrizen des anfänglichen Satzes der nxn Matrizen durch Iteration numerisch minimiert worden sind,
e)dass die den minimierten Gradienten entsprechenden $n\times n$ Matrizen als endgültige $n\times n$ Matrizen, die jeweils einem Codesymbol $C_k$ entsprechen, gewählt worden sind und ihre Matrixelemente als die den zu übertragenden Signalen entsprechenden Matrixelemente $c_{ijk}$ gewählt worden sind.

**5.** Verfahren nach Anspruch 3,
**dadurch gekennzeichnet**,

a)dass ein anfänglicher Satz von $2^l$ unitären $n\times n$ Ausgangsmatrizen $S_k$, $k$=0, 2, ...,$2^l$-1 numerisch zufällig erzeugt worden ist;
b) dass der Abstand der $i$.-ten Ausgangsmatrix zu allen anderen definiert worden ist als:

$$d_i^m=\sum_j|\det(S_j-S_i)|^m=\sum_j|\det(1-S_j^{\dagger}S_i)|^m:=\sum_j|\det(1-A_{ij})|^m\,;$$

c) dass die Gradienten

$$\vec{\nabla}_{S_i}d_i^m:=\vec{g}_i=n\sum_{j\neq i}|d_{ij}|^m\,\mathrm{Re}\,Tr(A_{ij}^{-1}\vec{B}_{ij})$$

berechnet worden sind, wobei $\vec{B}_{ij}=-jS^{\dagger}_jS_i\vec{\sigma}$ und $\sigma_i$ die entsprechenden Hermite'schen Standard Spinmatrizen sind;
d)dass die $i$.-te Ausgangsmatrix $S_i$ durch eine infinitesimale(unitäre) Rotation
$S_i\rightarrow S_i\exp(j\,\vec{\sigma}\bullet\vec{\delta}_i)\approx S_i+j\vec{\delta}_i\bullet S_i\vec{\sigma}$ variiert worden ist;
e) dass durch iterative Berechnung die Gradienten

$$\vec{\nabla}_{\delta_i} d_i^m := \vec{g}_i = n \sum_{j \neq i} | d_{ij} |^n \operatorname{Re} Tr(A_{ij}^{-1} \vec{B}_{ij})$$

berechnet worden sind, bis diese minimiert worden sind,

f)dass die den minimierten Gradienten entsprechenden $n \times n$ Matrizen als endgültige $n \times n$ Matrizen, die jeweils einem Codesymbol $C_k$ entsprechen, gewählt worden sind und ihre Matrixelemente als die den zu übertragenden Signalen entsprechenden Matrixelemente $c_{ijk}$ gewählt worden sind.

**6.** Verfahren nach einem der Ansprüche 3 bis 5,
**dadurch gekennzeichnet,**
**dass** die Ausgangsmatrizen $S_k$ nach folgendem Schema berechnet worden sind:

$$S_k = \begin{pmatrix} s_{11k} & & s_{1nk} \\ & \dots & \\ s_{n1k} & & s_{nnk} \end{pmatrix} = V \begin{pmatrix} \exp(\frac{2\pi j}{2^l} q_1 k) & & 0 \\ & \dots & \\ 0 & & \exp(\frac{2\pi j}{2^l} q_n k) \end{pmatrix} V^{-1}$$ (hier: $j$ ist

die imaginäre Einheit,)
wobei V eine beliebige unitäre komplexwertige $n \times n$ Matrix ist,
$s_{ijk}$ die im allgemeinen Fall komplexwertigen Matrixelemente von $s_k$,
$q_i$, $i$=1,...,$n$ beliebige ungerade ganze Zahlen,
und $k$ = 0, 1, ...,$2^l$-1.

**7.** Verfahren nach einem der Ansprüche 3 bis 5,
**dadurch gekennzeichnet,**
**dass** eine Abbildung einer finiten Gruppe G mit der Dimension $n$ und der Ordnung $o(G) \geq 2^l$ auf unitäre $n$ x $n$ Matrizen ermittelt worden ist, welche dann als Ausgangsmatrizen $S_k$ verwendet worden sind.

**8.** Verfahren nach Anspruch 1,
**dadurch gekennzeichnet,**
**dass** die den zu übertragenden Signalen entsprechenden Matrixelementen $c_{ijk}$ die Elemente von $2^l$ unitären $n$ x $n$ Matrizen $C_k$, $k$= 0, 2, ...,$2^l$-1 sind, die nach folgender Vorschrift konstruiert sind:

a)um ein beliebiges durch eine unitäre nxn Matrix repräsentiertes erstes Codesymbol $C_l$ ist eine "Hyperkugel" mit Radius r numerisch konstruiert worden, d.h. es ist die Menge aller Codesymbole ermittelt worden, für die gilt:

$$S_r=\{C' | \det(C'-C_1)=r\},$$

was durch Berechnung von

$$r=\det(C_1-C')=\det(1-C_1^{\dagger}C')=\det(1-\exp(j\vec{\sigma}\vec{\beta}))=\Pi_{i=1}^{n}(1-\exp(\lambda_i)),$$

geschehen ist, wobei $\lambda_i$ die Eigenwerte von $j\vec{\sigma}\ \vec{\beta}$ sind, wobei $\vec{\beta}$ für die Parameter der Matrix $C_1$ und $\vec{\sigma}$ für eine Matrix aus den Pauli-Spinmatrizen steht;

b)auf dieser Hyperkugel ist ein zweites durch eine unitäre $n \times n$ Matrix repräsentiertes Codesymbol $C_2$ gewählt worden, um welches wiederum eine Hyperkugel in analoger Weise zum Schritt a) konstruiert worden ist;

c)der Schnittpunkt der beiden Hyperkugeln um die Codesymbole $C_1$,$C_2$ hat mindestens ein weiteres Codesymbol $C_3$ ergeben, um welches wiederum iterativ weitere Hyperkugeln in der im Schritt a) angegebenen Weise konstruiert worden sind, bis ein vollständiger Satz von $2^l$ auf diese Weise konstruierter, jeweils durch eine unitäre $n \times n$ Matrix repräsentierte Codesymbole $C_k$ konstruiert worden ist.

**9.** Basisstation, welche in einem Verfahren nach einem der vorstehenden Ansprüche 1 bis 8 in einem digitalen Mobilfunknetz einsetzbar ist, und welche einen Speicher enthält, in welchem die Zuordnung einzelner zu übertragender Bitvektoren zu Raum-Zeit-Block-Symbolen in Form von Zuordnungtabellen abgespeichert ist, welche die in einem der Verfahren gemäß der Ansprüche 1 bis 8 verwendeten Matrixelemente $c_{ijk}$ enthalten.

**10.** Mobilstation, welche in einem Verfahren nach einem der vorstehenden Ansprüche 1 bis 8 in einem digitalen Mobilfunknetz einsetzbar ist, und welche einen Speicher enthält, in welchem die Zuordnung einzelner zu übertragender Bitvektoren zu Raum-Zeit-Block-Symbolen in Form von Zuordnungtabellen abgespeichert ist, welche die in einem der Verfahren gemäß der Ansprüche 1 bis 8 verwendeten Matrixelemente $c_{ijk}$ enthalten.

**11.** Computerprogrammprodukt, gespeichert auf einem computerlesbaren Medium, wobei das Computerprogrammprodukt maschinenlesbare Programmmittel zum Einlesen von in dem Computerprogrammprodukt enthaltenen Zuordnungtabellen in einen Speicher einer Basisstation oder einer Mobilstation in einem digitalen Mobilfunknetz enthält, und wobei die Zuordnungtabellen die Zuordnung einzelner zu übertragender Bitvektoren zu Raum-Zeit-Block-Symbolen zur Verwendung in einem Verfahren nach einem der Ansprüche 1 bis 8 enthalten.

## Claims

**1.** Method for operating a digital mobile radio network with orthogonally structured space-time block transmission codes with maximum diversity $n \times m$ for a defined number of $n$ transmitter antennas and $m, m = 2, 3, 4...$ receiver antennas, with a transmitting station of the mobile radio network being provided with $n, n = 2, 3, 4...$ transmitter antennas and a set of $2^l$ data bit vectors $\vec{b}=(b_1,b_2...b_l)\in B^l$ with $l$ bits $b_i\in\{0,1\}$ to be transmitted from this transmitting station being mapped by a one-to-one mapping

$$STM : B^l \rightarrow U(n)$$

$$\vec{b} \rightarrow C(\vec{b})$$

onto a set of $2^l$ space-time symbols (ST code symbols) $C_k$, $k=0,2,...,2^l-1$, with each code symbol $C_k$ corresponding to a unitary $n \times n$ matrix and the matrix elements $c_{ijk}$ of each of the $2^l$ code symbols $C_k$ being interpreted as space-time variables so that on transmission of one of the $2^l$ code symbols $C_k$ for each of its matrix elements $c_{ijk}$ a corresponding signal is transmitted from the transmitter antenna $i$ in a time interval $j$ via a fading channel associated with the transmitter antenna $i$, so that signals transmitted in the time interval $j$ and corresponding to the matrix elements $c_{ijk}$, $i=1, ..., n$ of the code symbol $C_k$ are received at each of $m$ receiver antennas of a receiving station within the range of the transmitting station and with a corresponding data bit vector $\vec{b}\in B^l$ to be transmitted being decoded by the reverse mapping

$$SMT^{-1} : U(n) \rightarrow B^l$$

$$C(\vec{b}) \rightarrow \vec{b}$$

due to the orthogonal structure of the space-time block transmission code and by decoupling the signals transmitted by the $n$ transmitter antennas and corresponding to the matrix elements $c_{ijk}$,
**characterised in that**
the matrix elements $c_{ijk}$ corresponding to the signals to be transmitted are the elements of $2^l$ unitary $n \times n$ matrices $C_k$, $k=0, 2, ..., 2^l-1$, constructed according to the following specification:

$$C_k = \begin{pmatrix} c_{11k} & & c_{1nk} \\ & \dots & \\ c_{n1k} & & c_{nnk} \end{pmatrix} = V \begin{pmatrix} \exp(\frac{2\pi j}{2^l} q_1 k) & & 0 \\ & \dots & \\ 0 & & \exp\frac{2\pi j}{2^l} q_1 k \end{pmatrix} V^{-1}$$

where
V is any unitary complex $n \times n$ matrix,
$C_{ijk}$ the generally complex matrix elements of $C_k$,
$j$ the imaginary unit,
$q_i$, $i$=l, ..., $n$ any odd whole numbers,
and $k = 0,1,\dots,2^l-1$.

2. Method according to claim 1,
**characterised in that** is $n$ even and $c_{ijk}$ is real-valued.

3. Method according to claim 1,
**characterised in that**
the matrix elements $c_{ijk}$ corresponding to the signals to be transmitted are the elements of $2^l$ unitary $n \times n$ matrices $C_k$, $k$=0, 2, ..., $2^l-1$, optimised numerically according to the following specification:

a) an initial set of $2^l$ unitary $n \times n$ initial matrices $S_k$, $k$=0, 2, ..., $2^l-1$ are generated numerically at random;
b) these initial matrices $S_k$, $k$=0, 2, ..., $2^l-1$ are parameterised;
c) the variable $d_{ij} := d(S(\vec{\beta}_i),S(\vec{\beta}_j))=|\det(S(\vec{\beta}_i)-S(\vec{\beta}_j))|$ is selected as the measure of distance between two initial matrices, with $\vec{\beta}_i$ representing the parameters of the ith initial matrix;
d) the target functional

$$E_q[\vec{\beta}_1,\vec{\beta}_2,\dots] = \left(\sum_{i<j}^{2^l}\left[d(S(\vec{\beta}_i),S(\vec{\beta}_j))\right]\right)^{\frac{1}{q}}$$

is minimised by numerical variation of the parameter $\vec{\beta}_i$;
e) the $n \times n$ matrices, for the parameter $\vec{\beta}_i$ of which the target functional

$$E_q[\vec{\beta}_1,\vec{\beta}_2,\dots] = \left(\sum_{i<j}^{2^l}\left[d(C(\vec{\beta}_i),C(\vec{\beta}_j))\right]\right)^{\frac{1}{q}}$$

was minimised numerically, are selected as final $n \times n$ matrices (code symbols $C_k$) and their matrix elements are selected as the matrix elements $c_{ijk}$ corresponding to the signals to be transmitted.

4. Method according to claim 3,
**characterised in that**
$n$ = 2 and

a) that every matrix $S_k$ of the initial set of unitary $n \times n$ initial matrices is parameterised as

$$S=1\beta_0+_j(\beta_1\sigma_1+\beta_2\sigma_2+\beta_3\sigma_3)=\vec{\beta}\cdot\vec{\sigma}$$

where the following applies for $\sigma_{l:}$

$$\sigma_1\begin{pmatrix}0 & 1\\ 1 & 0\end{pmatrix}, \sigma_2\begin{pmatrix}0 & -j\\ j & 0\end{pmatrix}, \sigma_3\begin{pmatrix}1 & 0\\ 0 & -1\end{pmatrix},$$

and $j$ is the imaginary unit, and the real parameters β are subject to the following restriction:

$$\sum_{i=0}^{3} \beta_i^2 = 1;$$

b) that $d_{ij}=\sqrt{1-\vec{\beta}_i \cdot \vec{\beta}_j}$ is selected as the measure of distance between two matrices $A_i$, $A_j$;
c) that the parameter vectors $\vec{\beta}_i$ are parameterised as

$$\vec{\beta}_i = \begin{pmatrix}\sin\Phi_{i3}\sin\Phi_{i2} & \sin\Phi_{i1}\\ \cos\Phi_{i3}\sin\Phi_{i2} & \sin\Phi_{i1}\\ \cos\Phi_{i2} & \sin\Phi_{i1}\\ & \cos\Phi_{i1}\end{pmatrix}$$

d) that the gradients

$$\frac{\partial}{\partial \Phi_{kl}} d = -\left(\frac{\partial}{\partial \Phi_{kl}} \vec{\beta}_k\right) \cdot \sum_{i \neq k} \frac{\vec{\beta}_i}{d_{ik}}$$

are minimised numerically for all matrices of the initial set of $n \times n$ matrices by iteration;
e) that the $n \times n$ matrices corresponding to the minimised gradients are selected as final $n \times n$ matrices (code symbols $C_k$) and their matrix elements are selected as the matrix elements $c_{ijk}$ corresponding to the signals to be transmitted.

**5.** Method according to claim 3,
**characterised in that**

a) an initial set of $2^l$ unitary $n \times n$ initial matrices $S_k$, $k$=0, 2, ..., $2^l-1$ is generated numerically at random;

b) the interval of the $i$th initial matrix in respect of all others is defined as:

$$d_i^m = \sum_j |\det(S_j - S_i)|^m = \sum_j |\det(1 - S_j^\dagger S_i)|^m := \sum_j |\det(1 - A_{ij})|^m;$$

c) the gradients

$$\vec{\nabla}_{\delta i} d_i^m := \vec{g}_i = n \sum_{j \neq i} |d_{ij}|^n \operatorname{Re} Tr\left(A_{ij}^{-1} \vec{B}_{ij}\right)$$

are calculated, with $\vec{B}_{ij}=-jS_j^\dagger S_i\vec{\sigma}$ and $\sigma_i$ representing the corresponding Hermitian standard spin matrices;

d) the ith initial matrix $S_i$ is varied by an infinitesimal (unitary) rotation

$$S_i \to S_i \exp(j\ \vec{\sigma}\bullet\vec{\delta}_i) \approx S_i + j\vec{\delta}_i\bullet S_i\vec{\sigma}\ ;$$

e) the gradients

$$\vec{\nabla}_{\delta_i} d_i^m := \vec{g}_i = n\sum_{j\neq i} |d_{ij}|^n\ \mathrm{Re}\,Tr(A_{ij}^{-1}\vec{B}_{ij})$$

are calculated by iterative calculation, until they are minimised.

f) the $n$ x $n$ matrices corresponding to the minimised gradients are selected as final $n$ x $n$ matrices (code symbols $C_k$) and their matrix elements are selected as the matrix elements $c_{ijk}$ corresponding to the signals to be transmitted.

**6.** Method according to one of claims 3 to 5
**characterised in that**
the initial matrices $S_k$ are calculated according to the following scheme:

$$S_k = \begin{pmatrix} s_{11k} & & s_{1nk} \\ & \cdots & \\ s_{n1k} & & s_{nnk} \end{pmatrix} = V \begin{pmatrix} \exp(\frac{2\pi j}{2^l} q_1 k) & & 0 \\ & \cdots & \\ 0 & & \exp\frac{2\pi j}{2^l} q_1 k \end{pmatrix} V^{-1}$$

(j is the imaginary unit here)
where V is any unitary complex $n$ x $n$ matrix,
$S_{ijk}$ the generally complex matrix elements of $S_k$,
$q_i$, $i$=1, ..., $n$ any odd whole numbers,
and $k$ = 0,1,...,$2^l$-1.

**7.** Method according to one of Claims 3 to 5,
**characterised in that**
a mapping of a finite group $G$ with the dimension $n$ and the order $o(G)\geq 2^l$ onto unitary $n \times n$ matrices is determined, said matrices then being used as initial matrices $S_k$.

**8.** Method according to claim 1,
**characterised in that**
the matrix elements $c_{ijk}$ corresponding to the signals to be transmitted are the elements of $2^l$ unitary $n \times n$ matrices $C_k$, $k$=0, 2, ..., $2^l$-1, constructed according to the following specification:

a) a "hypersphere" with a radius r is constructed numerically around any first code symbol $C_1$ represented by a unitary $n$ x $n$ matrix, i.e. the quantity of all code symbols is determined, for which the following applies:

$$S_r=\{C'|\det(C'-C_i)=r\},$$

which results from calculating

$$r = \det(C - C')=\det(1-C_1^{\dagger}C')=\det(1-\exp(j\ \vec{\sigma}\vec{\beta}))=\Pi_{i=1}^{n}(1-\exp(\lambda_i)),$$

where $\lambda_i$ are the eigenvalues of $j\vec{\sigma}\ \vec{\beta}$; where $\bar{\beta}$ stands for the parameter of the matrix $C_1$ and $\bar{\sigma}$ for a matrix from the Paulispin matrix,

b) on this hypersphere a second code symbol $C_2$ represented by a unitary $n \times n$ matrix is selected, around which a hypersphere is again constructed in a similar manner to stage a);

c) the point of intersection of the two hyperspheres around the code symbols $C_1$, $C_2$ has produced at least one further code symbol $C_3$, around which further hyperspheres are iteratively constructed as set out in stage a), until a full set of $2^l$ code symbols $C_k$ constructed in this way and represented in each instance by a unitary $n \times n$ matrix has been constructed.

**9.** Base station, which can be used in a digital mobile radio network in a method according to one of the preceding Claims 1 to 8 and which contains a storage unit, in which the association of individual bit vectors to be transmitted with space-time block symbols is stored in the form of association tables, which contain the matrix elements $c_{ijk}$ used in one of the methods according to Claims 1 to 8.

**10.** Mobile station, which can be used in a digital mobile radio network in a method according to one of the preceding Claims 1 to 8 and which contains a storage unit, in which the association of individual bit vectors to be transmitted with space-time block symbols is stored in the form of association tables, which contain the matrix elements $c_{ijk}$ used in one of the methods according to Claims 1 to 8.

**11.** Computer program product, stored on a computer-readable medium, with the computer program product containing machine-readable program tools for reading in association tables contained in the computer product in a storage unit of a base station or a mobile station in a digital mobile radio network and with the association tables containing the association of individual bit vectors to be transmitted with space-time block symbols for use in a method according to one of Claims 1 to 8.

## Revendications

**1.** Procédé pour exploiter un réseau radio mobile numérique avec des codes de transmission à blocs espace-temps construits orthogonalement avec une diversité maximale $n \times m$ pour un nombre donné de $n$ antennes émettrices et $m$, $m$ = 1, 2, 3, 4 ..., antennes réceptrices, une station émettrice du réseau radio mobile étant pourvue de $n$, $n$ = 2, 3, 4, ..., antennes émettrices et un jeu de $2^l$ vecteurs de bits d'information $\vec{b}=(b_1,b_2,...b_l)\in B^l$ avec $l$ bits $b_l\in\{0, 1\}$ , lequel est à transmettre par cette station émettrice, étant appliqué sur un jeu de $2^l$ symboles espace-temps $C_k$, $k$ = 0, 2, ..., $2^l$ -1 par une application bi-univoque

$$STM: B^l \rightarrow U(n)$$

$$\vec{b} \rightarrow C(\vec{b}),$$

chaque symbole de code $C_k$ correspondant à une matrice $n \times n$ unitaire et les éléments de matrice $c_{ijk}$ de chacun des $2^l$ symboles de code $C_k$ étant conçu en tant que variable espace-temps de manière telle que, lors de la transmission de l'un déterminé des $2^l$ symboles de code $C_k$, pour chacun de ses éléments de matrice $c_{ijk}$, un signal correspondant est rayonné par l'antenne émettrice $i$ dans un intervalle de temps $j$ par l'intermédiaire d'un canal d'affaiblissement affecté à l'antenne émettrice $i$ de manière telle que les signaux rayonnés dans l'intervalle de temps $j$ et correspondant aux éléments de matrice $c_{ijk}$, $i$ = 1, ..., $n$ du symbole de code $C_k$ sont reçus au niveau de chacune de $m$ antennes réceptrices d'une station réceptrice qui se trouve dans le rayon effectif de la station émettrice et un vecteur de bits d'information $\vec{b}\in B^l$ correspondant à transmettre étant décodé par l'application inverse

$$STM^{-1}: U(n) \rightarrow B^l$$

$$C(\vec{b}) \rightarrow \vec{b}$$

en raison de la structure orthogonale du code de transmission à blocs espace-temps et par découplage des signaux émis par les $n$ antennes émettrices et correspondant aux éléments de matrice $c_{ijk}$,
**caractérisé en ce que**

les éléments de matrice $c_{ijk}$ correspondant aux signaux à transmettre sont les éléments de $2^l$ matrices $n \times n$ unitaires $C_k$, $k = 0, 2, ..., 2^l -1$ qui sont construites selon la règle suivante:

$$C_k = \begin{pmatrix} c_{11k} & & c_{1nk} \\ & \cdots & \\ c_{n1k} & & c_{nnk} \end{pmatrix} = V \begin{pmatrix} \exp(\frac{2\pi j}{2^l} q_1 k) & & 0 \\ & \cdots & \\ 0 & & \exp(\frac{2\pi j}{2^l} q_n k) \end{pmatrix} V^{-1},$$

V étant une matrice $n \times n$ unitaire quelconque de valeurs complexes,
$c_{ijk}$ étant les éléments de matrice généralement de valeur complexe de $C_k$,
$j$ étant l'unité imaginaire,
$q_i$, $i = 1, ..., n$ étant des nombres entiers impairs quelconques et
$k = 0, 1, ..., 2^l -1$.

**2.** Procédé selon la revendication 1,
**caractérisé en ce que** $n$ est un nombre pair et les $c_{ijk}$ sont de valeur réelle.

**3.** Procédé selon la revendication 1,
**caractérisé en ce que** les éléments de matrice $c_{ijk}$ correspondant aux signaux à transmettre sont les éléments de $2^l$ matrices $n \times n$ unitaires $C_k$, $k = 0, 2, ..., 2^l -1$ qui sont optimisées numériquement selon la règle suivante:

a) un jeu de départ de $2^l$ matrices $n \times n$ unitaires de départ $S_k$, $k = 0, 2, ..., 2^l -1$ a été produit numériquement de manière aléatoire;
b) ces matrices de départ $S_k$, $k = 0, 2, ..., 2^l -1$ ont été paramétrisées;
c) on a choisi la grandeur $d_{ij} := d(S(\vec{\beta}_i), S(\vec{\beta}_j)) = |\det(S(\vec{\beta}_i) - S(\vec{\beta}_j))|$ en tant que mesure d'éloignement entre deux matrices de départ, $\beta_i$ représentant les paramètres de la i[ème] matrice de départ;
d) la fonctionnelle cible

$$E_q[\vec{\beta}_1, \vec{\beta}_2, ...] = \left( \sum_{i<j}^{2^l} \left[ d(S(\vec{\beta}_i), S(\vec{\beta}_j)) \right] \right)^{\frac{1}{q}}$$

a été minimisée par variation numérique des paramètres $\vec{\beta}_i$;
e) les matrices $n \times n$ pour les paramètres $\vec{\beta}_i$ desquelles la fonctionnelle cible

$$E_q[\vec{\beta}_1, \vec{\beta}_2, ...] = \left( \sum_{i<j}^{2^l} \left[ d(C(\vec{\beta}_i), C(\vec{\beta}_j)) \right] \right)^{\frac{1}{q}}$$

a été minimisée numériquement ont été choisies en tant que matrices $n \times n$ définitives qui correspondent respectivement à un symbole de code $C_k$ et leurs éléments de matrice ont été choisis en tant que les éléments de matrice $c_{ijk}$ correspondant aux signaux à transmettre.

**4.** Procédé selon la revendication 3, **caractérisé en ce que** $n = 2$ et **en ce que**

a) chaque matrice $S_k$ du jeu de départ de matrices $n \times n$ unitaires de départ a été paramétrisée sous la forme

$$S = 1\beta_0 + j(\beta_1\sigma_1 + \beta_2\sigma_2 + \beta_3\sigma_3) := \vec{\beta} \cdot \vec{\sigma}$$

avec pour les $\sigma_i$:

$$\sigma_1 = \begin{pmatrix} 0 & 1 \\ 1 & 0 \end{pmatrix}, \quad \sigma_2 = \begin{pmatrix} 0 & -j \\ j & 0 \end{pmatrix}, \quad \sigma_3 = \begin{pmatrix} 1 & 0 \\ 0 & -1 \end{pmatrix}$$

et $j$ étant l'unité imaginaire, et les paramètres β de valeur réelle sont soumis à la limitation suivante:

$$\sum_{i=0}^{3} \beta_i^2 = 1;$$

b) $d_{ij} = \sqrt{1 - \vec{\beta}_i \bullet \vec{\beta}_j}$ a été choisi en tant que mesure d'éloignement entre deux matrices $A_i$, $A_j$;
c) les vecteurs paramétriques $\vec{\beta}_i$ ont été paramétrisés sous la forme

$$\vec{\beta}_i = \begin{pmatrix} \sin\Phi_{i3} & \sin\Phi_{i2} & \sin\Phi_{i1} \\ \cos\Phi_{i3} & \sin\Phi_{i2} & \sin\Phi_{i1} \\ & \cos\Phi_{i2} & \sin\Phi_{i1} \\ & & \cos\Phi_{i1} \end{pmatrix}$$

d) les gradients

$$\frac{\partial}{\partial \Phi_{kl}} d = -\left(\frac{\partial}{\partial \Phi_{kl}} \vec{\beta}_k\right) \bullet \sum_{i \neq k} \frac{\vec{\beta}_i}{d_{ik}}$$

pour toutes les matrices du jeu de départ des matrices $n \times n$ ont été minimisés numériquement par itération,
e) les matrices $n \times n$ correspondant aux gradients minimisés ont été choisies en tant que matrices $n \times n$ définitives qui correspondent respectivement à un symbole de code $C_k$ et leurs éléments de matrice ont été choisis en tant que les éléments de matrice $c_{ijk}$ correspondant aux signaux à transmettre.

**5.** Procédé selon la revendication 3,
**caractérisé en ce que**

a) un jeu de départ de $2^l$ matrices $n \times n$ unitaires de départ $S_k$, $k = 0, 2, ..., 2^l - 1$ a été produit numériquement de manière aléatoire;
b) la distance entre la i^ème^ matrice de départ et toutes les autres a été définie comme étant:

$$d_i^m = \sum_j |\det(S_j - S_i)|^m = \sum_j |\det(1 - S_j^\dagger S_i)|^m := \sum_j |\det(1 - A_{ij})|^m;$$

c) les gradients

$$\vec{\nabla}_{\delta_i} d_i^m := \vec{g}_i = n \sum_{j \neq i} |d_{ij}|^m \, \mathrm{Re}\,Tr(A_{ij}^{-1} \vec{B}_{ij})$$

ont été calculés, $\vec{B}_{ij} = -jS^\dagger_j S_i \vec{\sigma}$ et $\sigma_i$ étant les matrices de spin standard de Hermite correspondantes;
d) la i^ème^ matrice de départ $S_i$ a été variée par une rotation (unitaire) infinitésimale

$$S_i \rightarrow S_i \exp(j\, \vec{\sigma} \bullet \vec{\delta}_i) \approx S_i + j \vec{\delta}_i \bullet S \vec{\sigma};$$

e) les gradients

$$\vec{\nabla}_{s_i} d_i^m := \vec{g}_i = n\sum_{j\neq i} |d_{ij}|^n \, \mathrm{Re}Tr(A_{ij}^{-1}\vec{B}_{ij})$$

ont été calculés par calcul itératif jusqu'à ce que ceux-ci aient été minimisés;
f) les matrices *n x n* correspondant aux gradients minimisés ont été choisies en tant que matrices *n x n* définitives qui correspondent respectivement à un symbole de code $C_k$ et leurs éléments de matrice ont été choisis en tant que les éléments de matrice $c_{ijk}$ correspondant aux signaux à transmettre.

**6.** Procédé selon l'une des revendications 3 à 5, **caractérisé en ce que** les matrices de départ $S_k$ ont été calculées selon le schéma suivant:

$$S_k = \begin{pmatrix} s_{11k} & & s_{1nk} \\ & \cdots & \\ s_{n1k} & & s_{nnk} \end{pmatrix} = V \begin{pmatrix} \exp(\frac{2\pi j}{2^l} q_1 k) & \cdots & 0 \\ \vdots & & \\ 0 & \cdots & \exp(\frac{2\pi j}{2^l} q_n k) \end{pmatrix} V^{-1}$$

(ici: *j* est l'unité imaginaire),
*V* étant une matrice *n x n* unitaire quelconque de valeurs complexes,
$s_{ijk}$ étant les éléments de matrice généralement de valeur complexe de $s_k$,
$q_i$, $i = 1, ..., n$ étant des nombres entiers impairs quelconques et
$k = 0, 1, ..., 2^l -1$.

**7.** Procédé selon l'une des revendications 3 à 5,
**caractérisé en ce**
**qu'**une application d'un groupe fini *G* de dimension *n* et d'ordre $o(G) \geq 2^l$ sur des matrices *n x n* unitaires a été déterminée, lesquelles ont alors été utilisées en tant que matrices de départ $S_k$.

**8.** Procédé selon la revendication 1,
**caractérisé en ce que**
les éléments de matrice $c_{ijk}$ correspondant aux signaux à transmettre sont les éléments de $2^l$ matrices n x n unitaires $C_k$, $k = 0, 2, ..., 2^l -1$ qui sont construites selon la règle suivante:

a) autour d'un premier symbole de code $C_1$ quelconque représenté par une matrice n x n unitaire a été construite numériquement une «hypersphère» de rayon r, c'est-à-dire qu'a été déterminé l'ensemble de tous les symboles de code pour lesquels on a:

$$S_r = \{C' | \det(C' - C_1) = r\},$$

ce qui a été fait par calcul de

$$r = \det(C_i - C') = \det(1 - C_i^{\dagger} C') = \det(1 - \exp(j\,\vec{\sigma}\vec{\beta})) = \Pi_{i=1}^{n}(1 - \exp(\lambda_i)),$$

$\lambda_i$ étant les valeurs propres de $j\vec{\sigma}\vec{\beta}$ , $\vec{\beta}$ représentant les paramètres de la matrice $C_1$ et $\vec{\sigma}$ une matrice parmi les matrices de spin de Pauli;
b) sur cette hypersphère a été choisi un deuxième symbole de code $C_2$ représenté par une matrice n x n unitaire autour duquel a de nouveau été construite une hypersphère de manière analogue à l'étape a);
c) le point d'intersection des deux hypersphères autour des symboles de code $C_1$, $C_2$ a fourni au moins un symbole de code supplémentaire $C_3$ autour duquel ont de nouveau été construites par itération des hypersphères supplémentaires de la manière indiquée à l'étape a) jusqu'à ce qu'ait été construit un jeu complet de $2^l$ symboles de code $C_k$ construits de cette manière, représentés respectivement par une matrice *n x n* unitaire.

**9.** Station de base qui peut être mise en oeuvre dans un procédé selon l'une des revendications précédentes 1 à 8 dans un système radio mobile numérique et qui contient une mémoire dans laquelle est mise en mémoire l'affectation, à des symboles de blocs espace-temps, de vecteurs de bits individuels à transmettre, sous la forme de tables d'affectation qui contiennent les éléments de matrice $c_{ijk}$ utilisés dans l'un des procédés selon les revendications 1 à 8.

**10.** Station mobile qui peut être mise en oeuvre dans un procédé selon l'une des revendications précédentes 1 à 8 dans un système radio mobile numérique et qui contient une mémoire dans laquelle est mise en mémoire l'affectation, à des symboles de blocs espace-temps, de vecteurs de bits individuels à transmettre, sous la forme de tables d'affectation qui contiennent les éléments de matrice $c_{ijk}$ utilisés dans l'un des procédés selon les revendications 1 à 8.

**11.** Produit de programme informatique mis en mémoire sur un support lisible par ordinateur, le produit de programme informatique contenant des moyens de programme lisibles par machine pour introduire par lecture, dans une mémoire d'une station de base ou d'une station mobile d'un réseau radio mobile numérique, des tables d'affectation contenues dans le produit de programme informatique, et les tables d'affectation contenant l'affectation, à des symboles de blocs espace-temps, de vecteurs de bits individuels à transmettre, pour utilisation dans un procédé selon l'une des revendications 1 à 8.

FIG 1

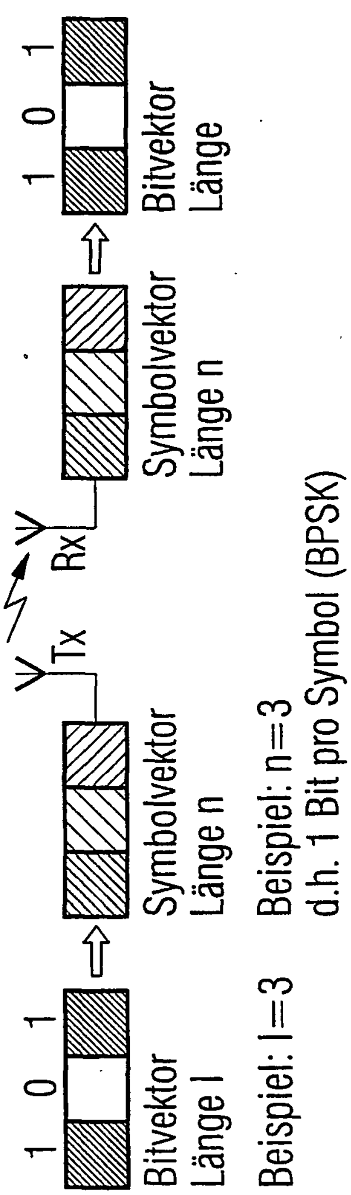
1 0 1
Bitvektor
Länge l
Beispiel: l=3
Symbolvektor
Länge n
Beispiel: n=3
d.h. 1 Bit pro Symbol (BPSK)
Tx
Rx
Symbolvektor
Länge n
1 0 1
Bitvektor
Länge

FIG 2

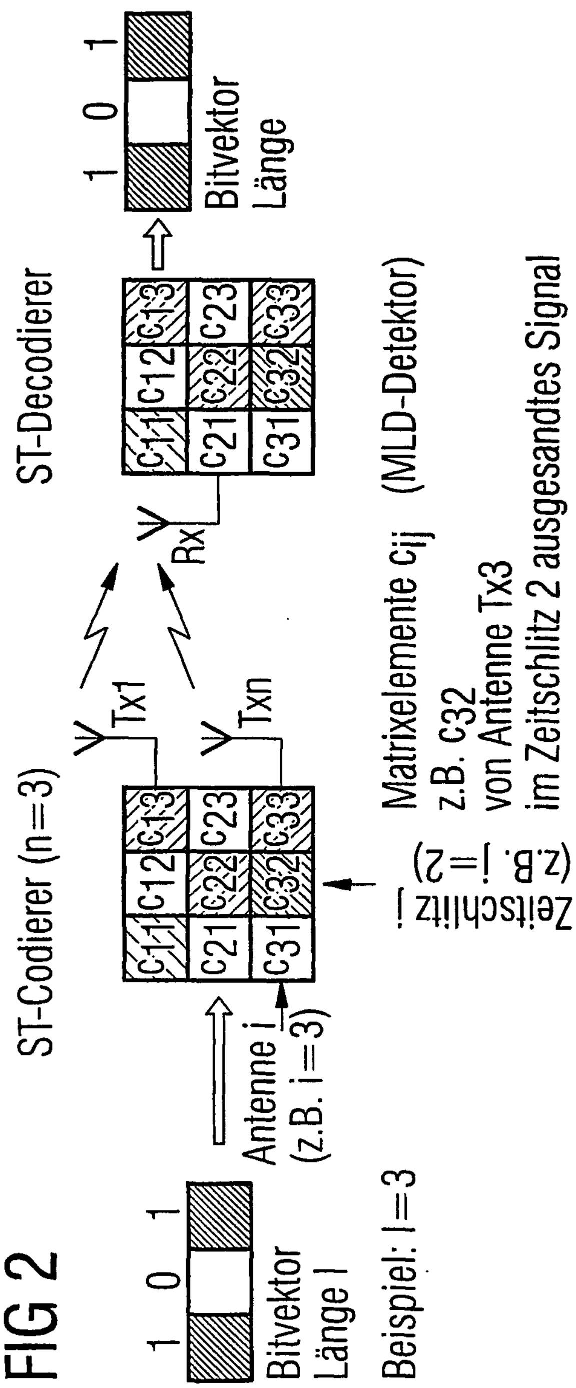
1 0 1
Bitvektor
Länge l
Beispiel: l=3
Antenne i
(z.B. i=3)
ST-Codierer (n=3)
c11 c12 c13
c21 c22 c23
c31 c32 c33
Zeitschlitz j
(z.B. j=2)
Tx1
Txn
Matrixelemente cij
z.B. c32
von Antenne Tx3
im Zeitschlitz 2 ausgesandtes Signal
Rx
ST-Decodierer
c11 c12 c13
c21 c22 c23
c31 c32 c33
(MLD-Detektor)
1 0 1
Bitvektor
Länge

# FIG 3A

nicht-linearer ST Block Code für n=3 Sendeantennen und BPSK-Modulation (Symbollänge l=n=3) den $2^3=8$ möglichen Bitvektoren
(0,0,0); (0,0,1); (0,1,0); (1,1,1); (1,0,1); (1,0,0)
werden eineindeutig 8 Codewörter C(:,:,k) zugeordnet mit k=1,...,8
(unitäre 3x3 Matrizen mit komplexwertigen Matrixelementen mit Realteil und Imaginärteil)

letzer Index (k): Nummer des Codeworts
erster Index (Zeile i): jeweilige Sendeantenne
zweiter Index (Spalte j Zeitschlitz (drei Zeitschlitze bei drei Antennen))

i ist die imaginäre Einheit

# FIG 3B

| Bitvektor | Symbolwort | | | | | | |
|---|---|---|---|---|---|---|---|
| | | 1 | | 0 | | 0 | |
| (0,0,0) -> | C(:,:,1)= | 0 | | 1 | | 0 | |
| | | 0 | | 0 | | 1 | |
| | | +0.4856 | -0.6930i | +0.4701 | -0.1224i | -0.1925 | -0.1046i |
| (0,0,1) -> | C(:,:,2)= | -0.0645 | +0.1553i | +0.1240 | -0.4898i | +0.3194 | -0.7838i |
| | | +0.4372 | +0.2541i | -0.1146 | -0.7039i | +0.0971 | +0.4757i |
| | | +0.0000 | -0.4794i | -0.6025 | -0.5061i | -0.1182 | -0.3701i |
| (0,1,1) -> | C(:,:,3)= | +0.6025 | -0.5061i | -0.0000 | +0.1895i | -0.3134 | +0.4966i |
| | | +0.1182 | -0.3701i | +0.3134 | +0.4966i | +0.0000 | -0.7101i |
| | | -0.4856 | -0.2547i | -0.2395 | -0.3167i | -0.7322 | +0.0746i |
| (0,1,0) -> | C(:,:,4)= | -0.1662 | -0.5944i | -0.1244 | -0.3972i | +0.5656 | +0.3549i |
| | | +0.4875 | -0.2841i | -0.7704 | +0.2750i | -0.0971 | -0.0552i |
| | | -0.6868 | -0.2309i | -0.3890 | +0.4491i | +0.2575 | +0.2361i |
| (1,1,0) -> | C(:,:,5) | -0.1846 | +0.0563i | -0.1759 | +0.2728i | -0.8527 | -0.3608i |
| | | -0.6035 | -0.2713i | +0.5631 | -0.4738i | -0.1373 | -0.0419i |
| | | -0.4856 | +0.5282i | -0.0850 | +0.6697i | -0.1344 | -0.1066i |
| (1,1,1) -> | C(:,:,6) | -0.3206 | +0.3920i | -0.1244 | -0.5620i | -0.4128 | +0.4918i |
| | | -0.1103 | -0.4654i | +0.2080 | +0.4119i | -0.0971 | +0.7409i |
| | | +0.0000 | +0.6442i | +0.2175 | -0.0412i | +0.4451 | +0.5913i |
| (1,0,1) -> | C(:,:,7) | -0.2175 | -0.0412i | +0.0000 | +0.8623i | +0.4068 | -0.2047i |
| | | -0.4451 | +0.5813i | -0.4068 | -0.2047i | +0.0000 | -0.5065i |
| | | +0.1724 | +0.4856i | +0.6285 | -0.1324i | +0.4747 | -0.3107i |
| (1,0,0) -> | C(:,:,8) | +0.3508 | +0.5381i | -0.6996 | +0.1244i | +0.2871 | +0.0060i |
| | | +0.1160 | +0.5554i | +0.2072 | +0.1988i | -0.7656 | +0.0971i |

# FIG 4

3 Antennen (BPSK):
L-1 Code Abstände (Minimal-Eigenwert Norm)
und Bit-Abbildung (Gray Code)

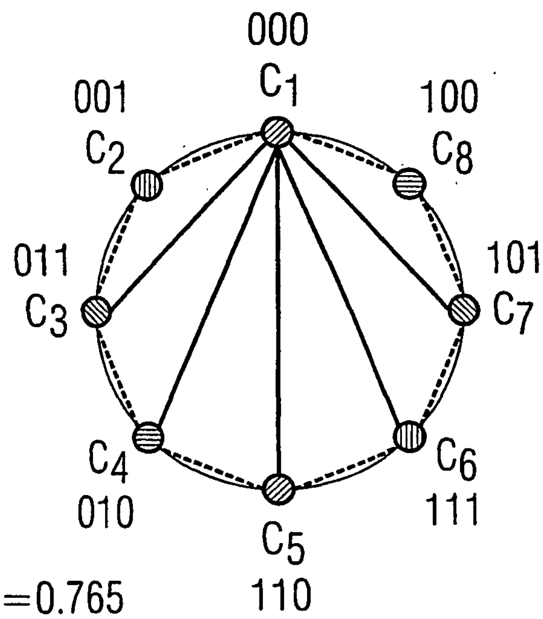


-------- $d_{ij}$=0.765

—— $d_{ij}$ sqrt(2) (nur Abstände zu C1 sind gezeigt.
Alle anderen Kombinationen von nicht-direkten
Nachbarn gehen auch mit der Quadratwurzel aus 2 ein).

FIG 5

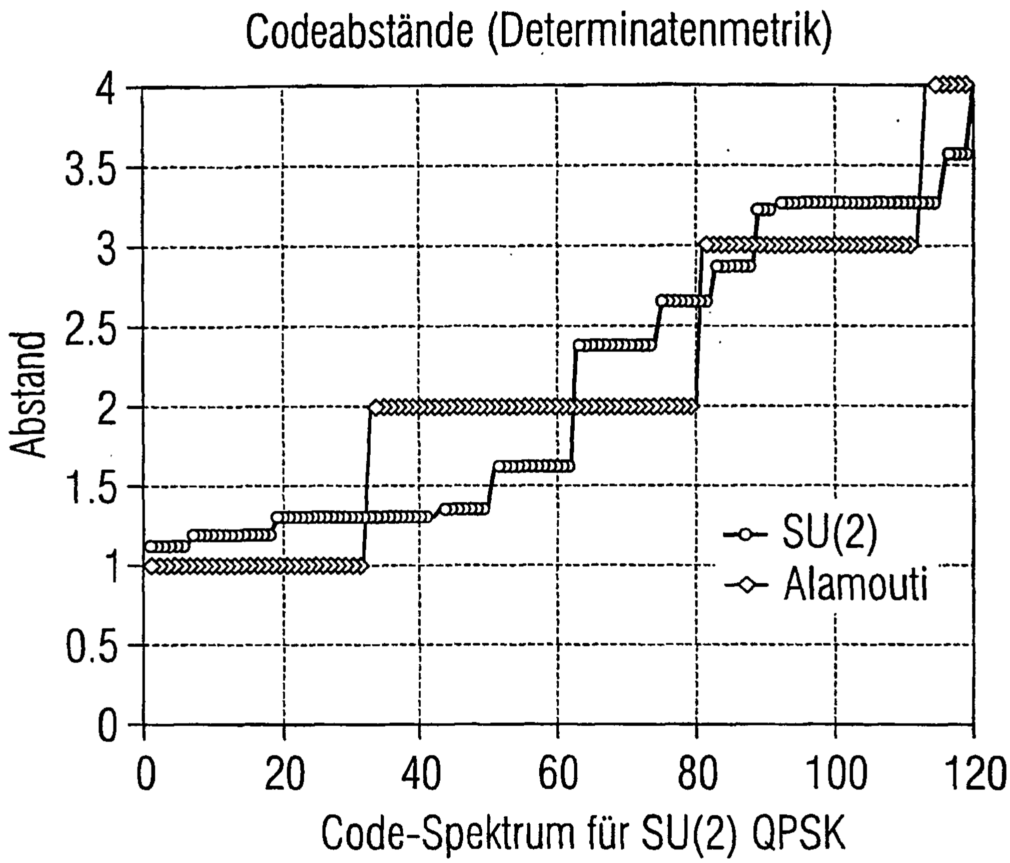
Codeabstände (Determinatenmetrik)
Abstand
4
3.5
3
2.5
2
1.5
1
0.5
0
0
20
40
60
80
100
120
Code-Spektrum für SU(2) QPSK
SU(2)
Alamouti

FIG 6

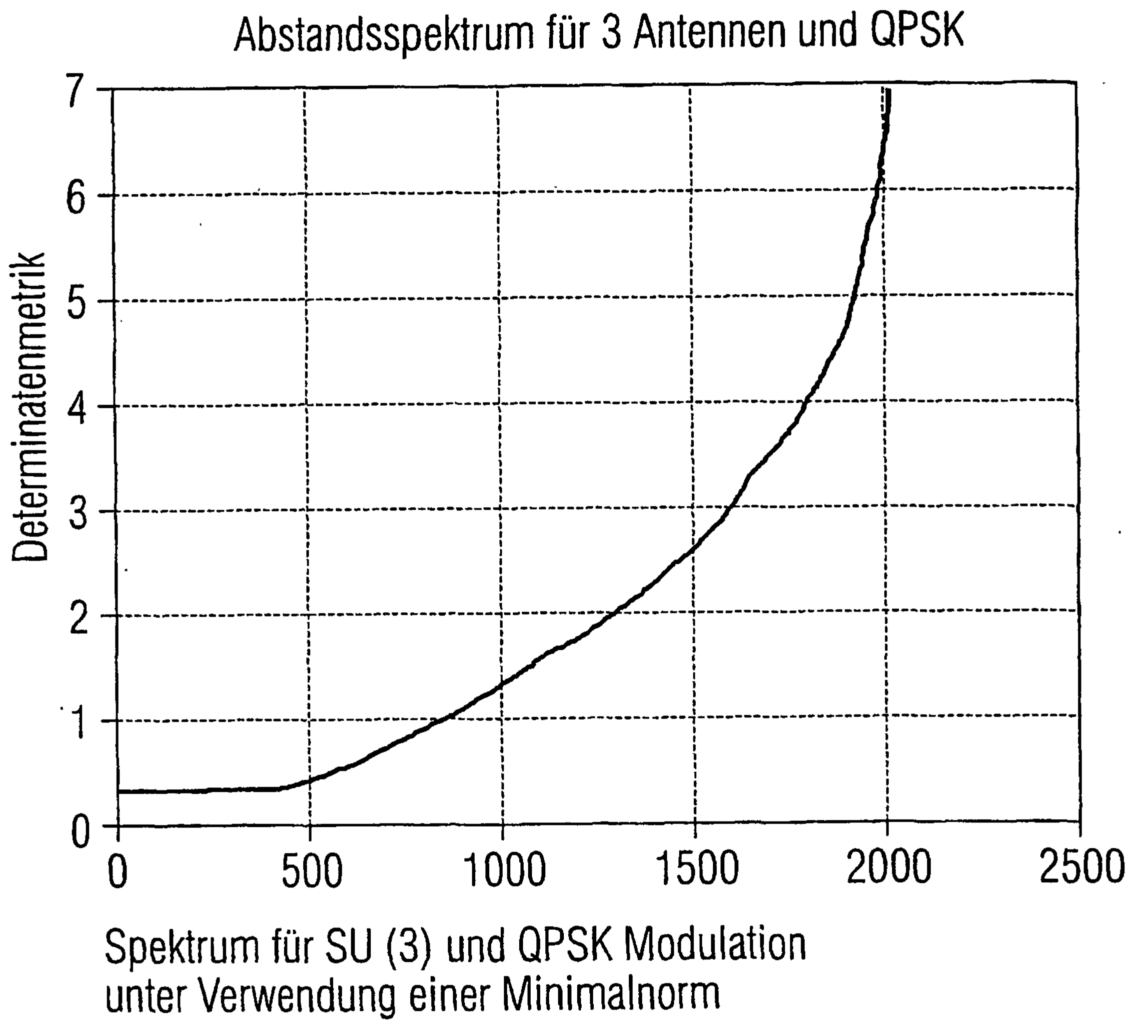
Abstandsspektrum für 3 Antennen und QPSK
Determinatenmetrik
0
1
2
3
4
5
6
7
0
500
1000
1500
2000
2500
Spektrum für SU (3) und QPSK Modulation
unter Verwendung einer Minimalnorm

FIG 7

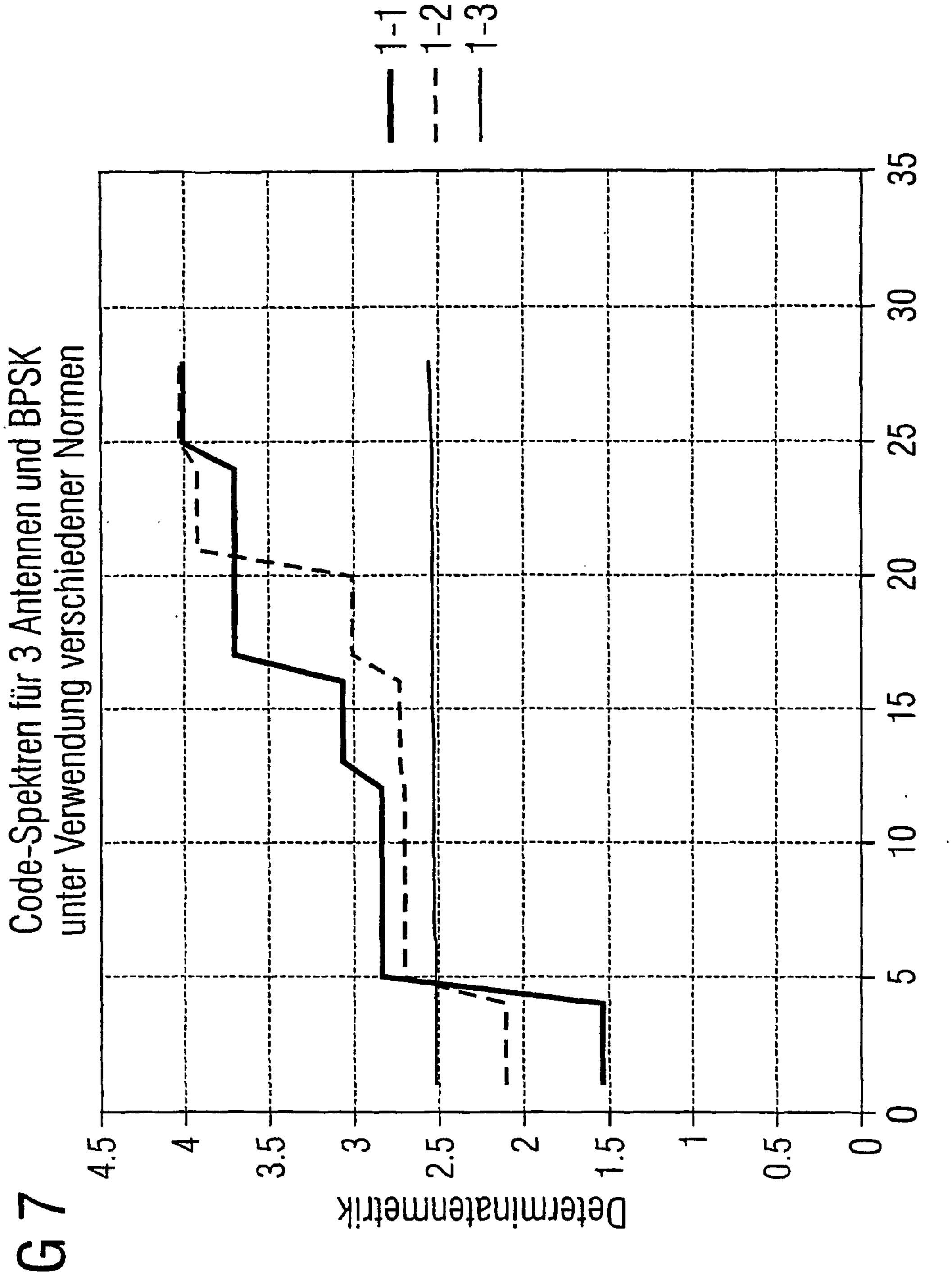

Code-Spektren für 3 Antennen und BPSK
unter Verwendung verschiedener Normen
Determinatenmetrik
4.5
4
3.5
3
2.5
2
1.5
1
0.5
0
0
5
10
15
20
25
30
35
1-1
1-2
1-3

# FIG 8

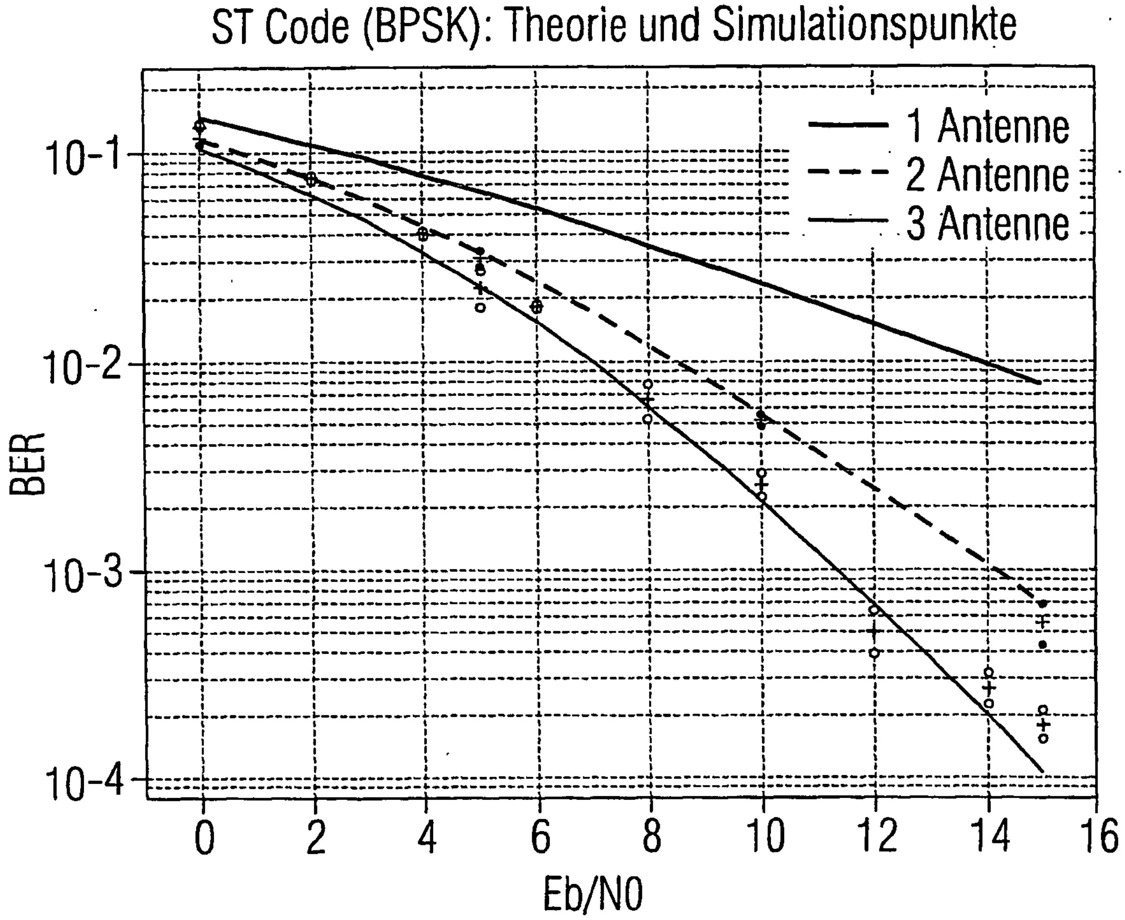


BPSK Simulation für 2 und 3 Antennen unter Verwendung eines $L_{min}$-Codes

FIG 9

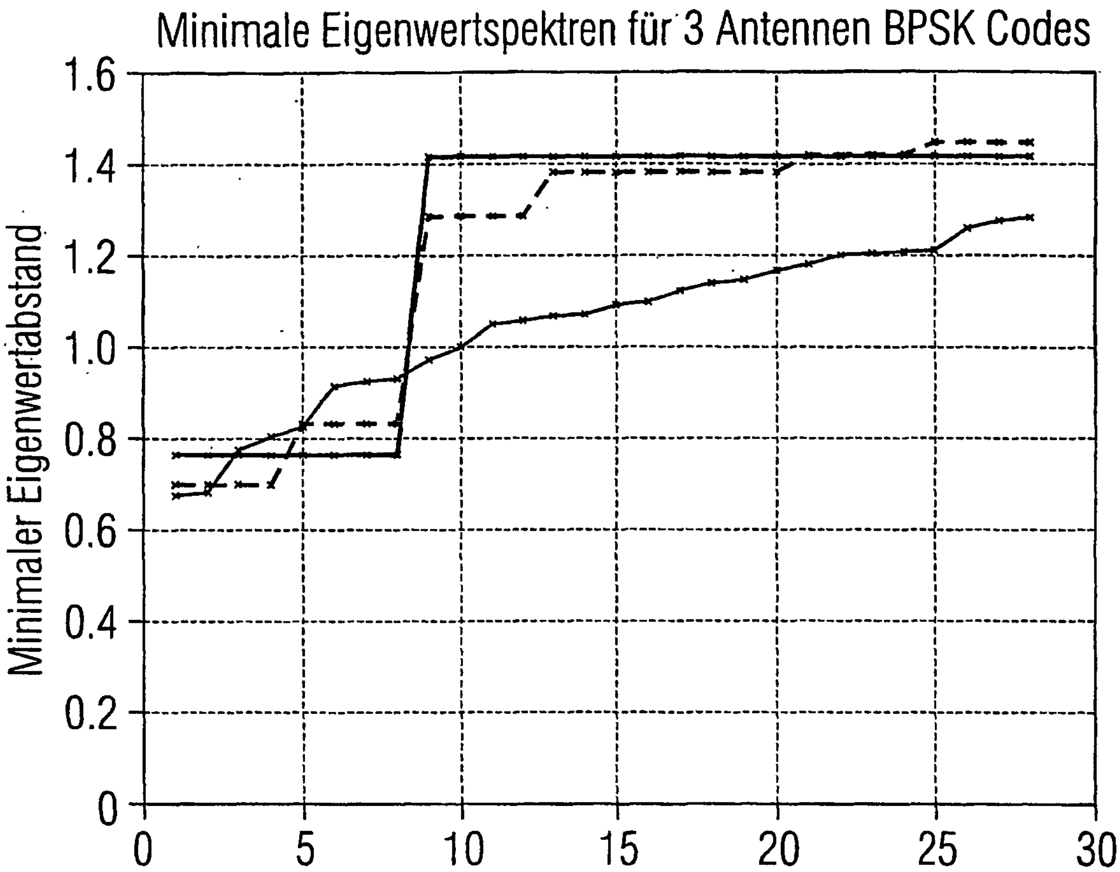
Minimale Eigenwertspektren für 3 Antennen BPSK Codes
Minimaler Eigenwertabstand
1.6
1.4
1.2
1.0
0.8
0.6
0.4
0.2
0
0
5
10
15
20
25
30

# FIG 10

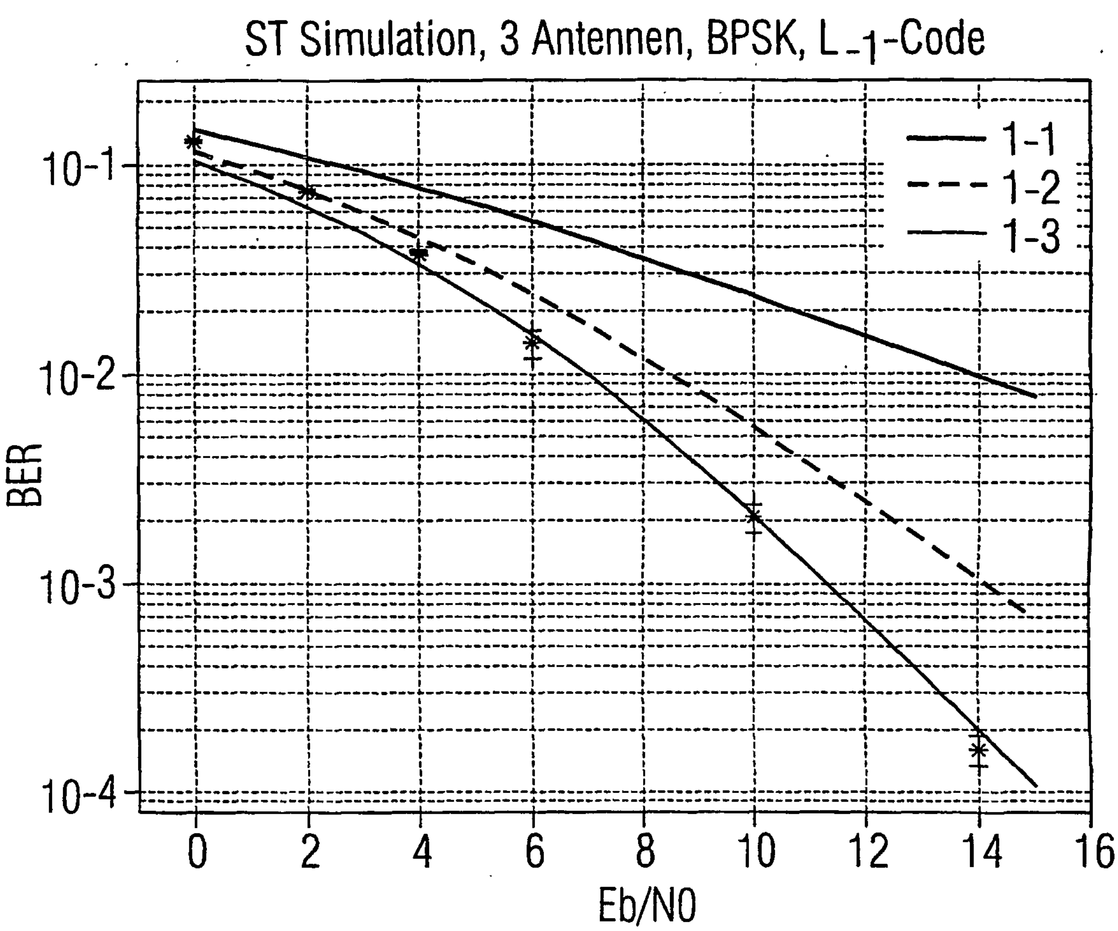
ST Simulation, 3 Antennen, BPSK, L-1-Code
1-1
1-2
1-3
10-1
10-2
10-3
10-4
BER
0
2
4
6
8
10
12
14
16
Eb/N0